# EUROPEAN PATENT APPLICATION

(11) **EP 4 825 171 A1**
(43) Date of publication of application: **21.10.2026**
(21) Application number: 26158923.8
(22) Date of filing: 17.02.2026
(51) Int. Cl.: A01M 7/00, B05B 12/00, A01C 23/00

(54) **AGRICULTURAL SYSTEM AND COMPUTER IMPLEMENTED METHOD FOR SUCH**

(30) Priority: 17.04.2025 US 202519182140
(71) Applicant: Deere & Company, Moline, IL 61265 (US)
(72) Inventor: Marx, Samuel, 68163 Mannheim (DE); Ruby, Jordan J, 68163 Mannheim (DE); Steele, Michael C, 68163 Mannheim (DE); Patel, Ankit Y, 68163 Mannheim (DE); Herrmann, Kenneth, 68163 Mannheim (DE); Mcmackin, Lester, 68163 Mannheim (DE); Goldberg, Benjamin, 68163 Mannheim (DE)
(74) Representative: Reichert, Christian

(57) **Abstract**

An agricultural system (90) is disclosed. The agricultural system (90), comprising: an applicator (109) having a valve (300) and an exit end, the valve (300) being controllable to move between an open position, in which liquid under pressure passes from an inlet end of the applicator (109) to the exit end of the applicator (109) , and a closed position; a pressure sensor (306) configured to sense pressure between the valve (300) and the exit end of the applicator (109) and generate a sensor signal responsive to the sensed pressure; an applicator state detection system (372) configured to identify a pressure characteristic corresponding to the applicator (109) based on the sensor signal and to determine an applicator state corresponding to the applicator (109) based on the pressure characteristic; and a control signal generator (374) configured to generate a control signal responsive to the applicator state. Furthermore, an computer implemented method of operating such agricultural machine is disclosed.

## Description

### FIELD OF THE DESCRIPTION

The present description relates to agricultural machines. More specifically, the present description relates to detecting liquid applicator state during application of material to a field, using an agricultural machine.

### BACKGROUND

There is a wide variety of different types of agricultural machines that apply material to an agricultural field. Some such agricultural machines include sprayers, tillage machines with side dressing bars, air seeders, and planters that have row units, among others.

As one example, a row unit is often mounted to a planter with a plurality of other row units. The planter is often towed by a tractor or moved over soil by another propulsion vehicle where seed is planted in the soil, using the row units. The row units on the planter follow the ground profile by using a combination of a down force assembly that imparts a down force to the row unit to push disk openers into the ground and gauge wheels to set depth of penetration of the disk openers. Row units can also be used to apply material to the field (e.g., fertilizer to the soil, to a seed, etc.) over which the row units are traveling. In some scenarios, each row unit has a valve that is coupled between a source of material to be applied, and an application assembly. As the valve is actuated, the material passes through the valve, from the source to the application assembly, and is applied to the field.

The discussion above is merely provided for general background information and is not intended to be used as an aid in determining the scope of the claimed subject matter.

### SUMMARY

An agricultural machine includes a plurality of applicators that apply discrete bands of material to a field. Each applicator has a flow control valve that is controlled to selectively apply material to the field through an exit end of the applicator. Each applicator has a pressure sensor that senses pressure between the flow control valve and the exit end of the applicator. An applicator state is detected for each of the plurality of applicators based upon a pressure characteristic corresponding to the applicator. A control signal is generated based on the detected state of the applicator.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. The claimed subject matter is not limited to implementations that solve any or all disadvantages noted in the background.

### BRIEF DESCRIPTION OF THE DRAWINGS

FIG. 1 is a top view of an agricultural architecture with one example of a planting machine, shown in a partial pictorial and partial schematic form.
FIG. 2 shows a block diagram of one example of a portion of an agricultural system.
FIG. 3 is a side view showing one example of a row unit of the planting machine illustrated in FIG. 1.
FIG. 4 is a side view showing another example of a row unit of the planting machine illustrated in FIG. 1.
FIG. 5 is a side view showing another example of a row unit of the planting machine illustrated in FIG. 1.
FIG. 6 is a view of an application unit.
FIG. 7 is an enlarged view of a portion of a row unit of the planting machine illustrated in FIG. 4.
FIG. 8 is an enlarged view of one example of an applicator.
FIGS. 9 is a block diagram showing one example of an agricultural system with an application state detection and control system.
FIGS. 10A and 10B (collectively referred to herein as FIG. 10) show a flow diagram illustrating one example of the operation of the application state detection and control system shown in FIG. 9.
FIG. 11 is a flow diagram illustrating one example of identifying an applicator condition based upon detected pressures and decay times.
FIG. 12A is a flow diagram illustrating one example of identifying an applicator condition based upon aggregated pressure values.
FIG. 12B shows a plot of aggregated pressures for different applicator conditions plotted against boom pressure.
FIG. 12C illustrates detecting applicator state using different sensitivity settings
FIG. 13 shows one example of the architecture illustrated in FIG. 1, deployed in a remote server environment.
FIGS. 14, 15, and 16 show examples of mobile devices that can be used as operator interface mechanisms in the architectures shown in the previous Figures.
FIG. 17 is a block diagram showing one example of a computing environment that can be used in the architectures shown in the previous Figures.

### DETAILED DESCRIPTION

For the purposes of promoting an understanding of the principles of the present disclosure, reference will now be made to the examples illustrated in the drawings, and specific language will be used to describe the same. It will nevertheless be understood that no limitation of the scope of the disclosure is intended. Any alterations and further modifications to the described devices, systems, methods, and any further application of the principles of the present disclosure are fully contemplated as would normally occur to one skilled in the art to which the disclosure relates. In particular, it is fully contemplated that the features, components, and/or steps described with respect to one example may be combined with the features, components, and/or steps described with respect to other examples of the present disclosure.

As discussed above, many current systems apply material to a field. Some systems that apply material to a field include a set of actuators that actuate a set of valves or nozzles. The material to be applied to the field (which may be liquid) is pumped from a tank to the valves or nozzles through supply lines. A control system controls the actuators to actuate the valves or nozzles (to open and/or close the valves or nozzles) to allow the material under pressure to flow through the valves or nozzles, out of a spray tip or exit orifice, onto the field. Some spray tips are configured to provide a desired spray pattern, while others are fixed orifices or open tubing or outlets from a tube.

The environments in which systems apply material to a field are often dusty so that the applicators encounter dust, dirt, and other debris. It is not uncommon for moisture to accumulate on the nozzle or spray tip of an applicator and thus gather dust or other debris causing a partial or full blockage of the spray tip. Similarly, the spray tip on the applicators may be knocked off or may fall off the applicator. Thus, instead of generating a desired spray pattern, the flow of material through the applicator is unrestricted.

In an attempt to detect the state of the applicator (such as whether the applicator is unblocked, fully blocked, partially blocked, or unrestricted), some systems may use a flow meter that measures a quantity of material that flows through each valve. The output of the flow meter can then be used to identify the state of the corresponding applicator. However, machines that are used to apply material to a field may have numerous applicators. For instance, such a machine may have numerous row units and there may be multiple valves or applicators on each row unit, thus making the use of a flow meter on every applicator inefficient.

The present description thus proceeds with respect to a system in which an application machine has a plurality of different applicators. The applicators have a pressure sensor disposed downstream of a flow control valve in the applicator to generate a material pressure signal. The pressure signals from the different pressure sensors in the different applicators can be processed to identify ranges or threshold values that can be used to determine applicator state. An application state detection and control system processes the pressure signals to identify pressure characteristics corresponding to the pressure signals (such as an aggregated pressure value sensed when the valve is open, the pressure decay that is sensed after the valve is closed, etc.) and generates an output indicative of the state of each applicator, such as whether there is a partial blockage, a full blockage, no blockage, or an unrestricted flow (meaning that the spray tip may be damaged or missing). A control signal can be generated based upon the applicator state. The control signal can notify the operator of the state of the applicator, control the applicator itself, control a central flow system, or control other items.

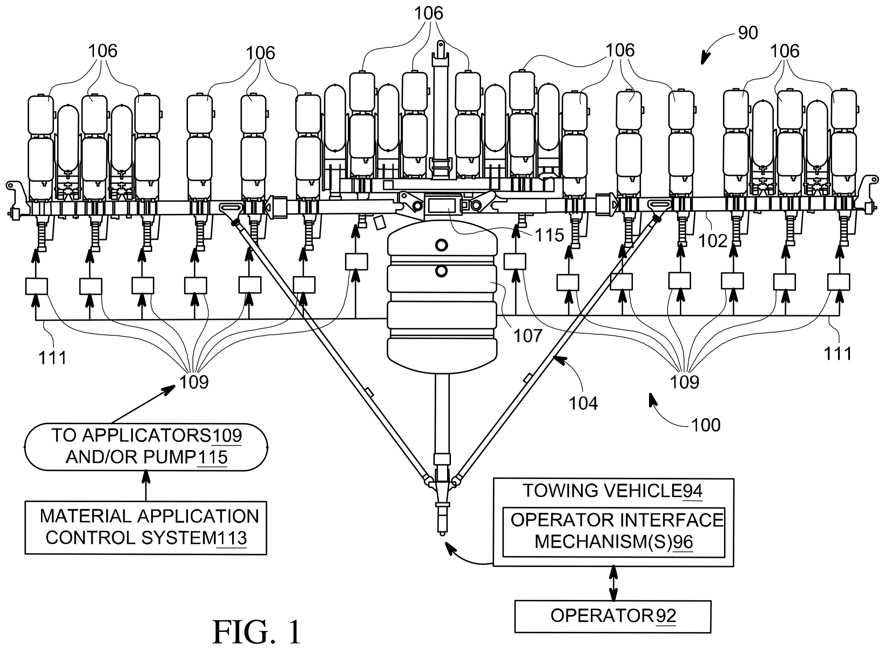

FIG. 1 is a partial pictorial, partial schematic top view of one example of an agricultural system or architecture 90 that includes agricultural planting machine 100, towing vehicle 94 that is operated by operator 92, and material application control system 113, which can be deployed on one or more individual parts of machine 100, centrally located on machine 100, remotely located, distributed, or located on towing vehicle 94. Operator 92 (which can be a manual operator, an automated operator, or a semi-automated operator) can illustratively interact with operator interface mechanisms 96 to manipulate and control vehicle 94, system 113, and some or all portions of machine 100.

In the example shown in FIG. 1 machine 100 is a row crop planting machine that illustratively includes a toolbar 102 that is part of a frame 104. FIG. 1 also shows that a plurality of planting row units 106 are mounted to the toolbar 102. Machine 100 can be towed behind towing vehicle 94, such as a tractor. FIG. 1 shows that material can be stored in tank 107 (or material(s) can be stored in a plurality of tanks) and pumped through one or more supply lines 111 so the material can be dispensed or applied in or near the rows being planted. In one example, a set of applicators 109 is provided to perform the application operation. For instance, applicators 109 can include individual pumps that service individual row units 106 and pump material from tank(s) 107 through supply line(s) 111 so the material(s) can be dispensed on the field. In such an example, material application control system 113 controls the pumps 109. Also, applicators 109 can include actuators that actuate valves or nozzles. One or more pumps 115 pump the material from tank(s) 107 to the valves or nozzles through supply line(s) 111. In such an example, material application control system 113 controls the actuators by generating actuator control signals to apply material according to a desired pattern, e.g., to apply a continuous strip of material, to apply material in an overlapping pattern, to apply material in a spaced pattern (e.g. on a per-seed basis), or in other ways.

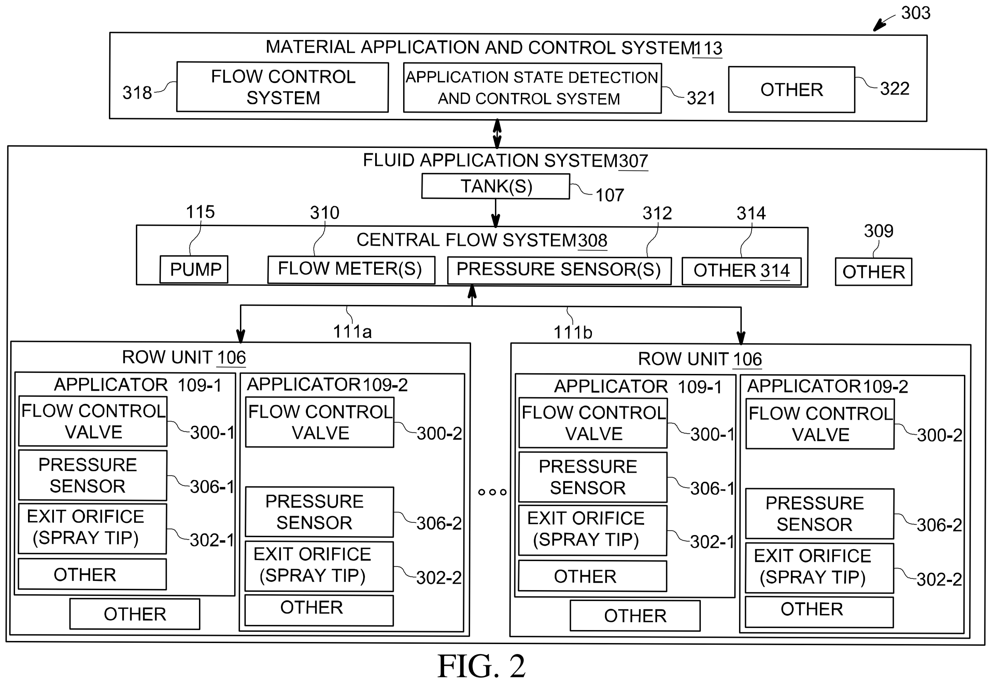

Material application control system 113 also receives sensor signals and other information and identifies problems with applicators 109, such as whether the applicators 109 are blocked, partially blocked, or unrestricted. Identifying such problems is described in greater detail elsewhere herein. FIG. 2 is a block diagram showing one example of a portion of an agricultural system or agricultural architecture. In the example shown in FIG. 2, an agricultural system or architecture 303 for a fluid application system 307 on machine 100 is illustrated in which each row unit 106 has a plurality of applicators. The applicators on each row unit 106 are numbered 109-1 to 109-2. However, it will be appreciated that there may be any number of applicators on each row unit 106. In the example shown in FIG. 2, a single tank 107 holds material that is sent to the set of applicators 109-1 to 109-2 on each row unit 106 by a central flow system 308 which can include one or more pumps 115, flow meter 310, pressure sensor 312, and other items 314. Fluid is pumped by one or more pumps 115 through a plurality of different supply lines (labeled 111A-111B in FIG. 2) to a plurality of different applicators 109-1, 109-2 on each row unit 106. Each applicator 109-1, 109-2 can have a flow control valve (300-1, 300-2) that is controlled by an actuator. Each applicator 109-1, 109-2 can also have an exit orifice defined by a spray tip 302-1, 302-2, which may be an opening in the end of a tube, a spray tip that provides a desired spray pattern, or another spray tip. The valves 300-1, 300-2 are opened to allow liquid under pressure to flow out through spray tip 302-1, 302-2. A valve output pressure sensor 306-1, 306-2 is deployed to sense fluid pressure downstream of valve 300-1, 300-2, but upstream of spray tip 302-1, 302-2. Pressure sensors 306-1 through 306-2 could also deployed at other locations on the applicators 109-1 and 109-2. Applicators 109-1 and 109-2 can include other items 497-1 and 497-2. Row units 106 can include other items 499. Fluid application system 307 can include other items 309 as well.

In operation, the pressure generated in lines 111A, 111B by pump(s) 115 can be sensed by pressure sensor 312. Where a central flow meter 310 is used, the flow of material generated by pump 115 can be sensed by flow meter 310. Pressure sensors 306-1, 306-2, and 312 can be pressure sensors or pressure transducers. Pressure sensors 306-1, 306-2, and 312 can be diaphragm sensors, manometer sensors, Bourdon tube sensors, piezoelectric sensors, strain gauge sensors, or other sensors.

FIG. 2 also shows that material application control system 113 can include flow control system 318, application state detection and control system 321, and other items 322. Flow control system 318 can generate control signals which are provided to control the different applicators 109 on the different row units 106. Therefore, material application control system 113 can generate different control signals to independently control the individual applicators 109-1 and 109-2 independently of one another on each of the row units 106 so that the material from tank 107 can be applied according to a first application pattern (e.g., continuously in a furrow) using applicator 109-1 and according to a second application pattern (e.g., intermittently based upon seed position in the furrow) using applicator 109-2, or the applicators can both apply material according to the same pattern..

Also, in one example, application state detection and control system 321 receives sensor signals from sensors 310, 312, 306-1, 306-2, and 320 as well as other information (such as a target application rate, characteristics of the spray tips 302-1, 302-2, and/or other information), and provides that information to an applicator state detection system (described in greater detail elsewhere herein) that generates an output corresponding to each applicator 109-1, 109-2 indicative of the state of that applicator, such as whether the applicator is unblocked, partially blocked, fully blocked, unrestricted, etc. In addition, application state detection and control system 321 can generate a control signal based upon the state of the applicator, etc.

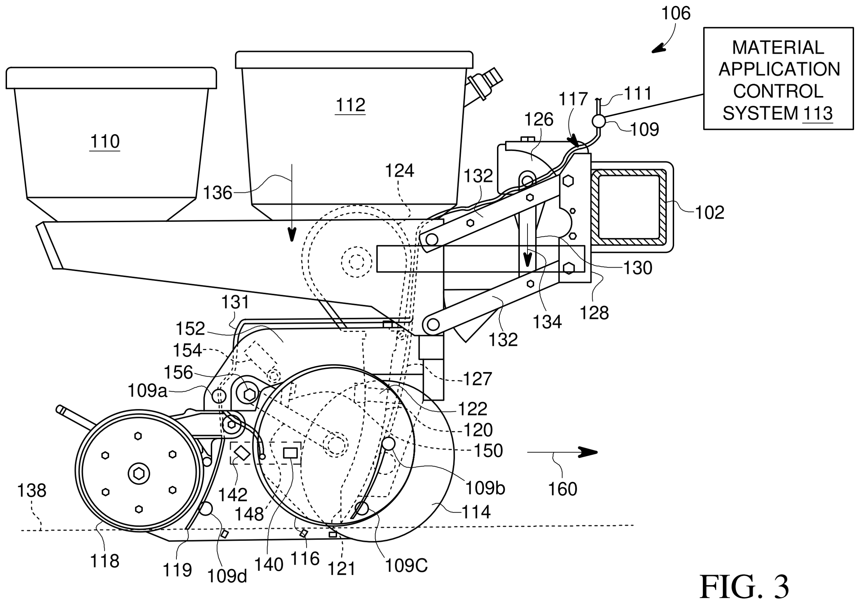

Some examples of the functionality on row units 106 will now be described with respect to FIGS. 3-6. FIG. 3 is a side view of one example of a row unit 106, with applicator 109 and system 113 shown as well. One more detailed example of applicator 109 is described elsewhere herein. FIG. 3 shows that one or more applicators 109 can be in at least six possible locations labeled as 109, 109A, 109B, 109C, 109D, and 109E. It will be appreciated that row unit 106 may illustratively have a plurality of independently controllable applicators 109 (such as applicators 109-1 to 109-2 shown elsewhere herein) that can each be located at one or more of the different locations indicated by numbers 109-109E or at other locations on row unit 106. Row unit 106 illustratively includes a chemical tank 110 and a seed storage tank 112. Row unit 106 also illustratively includes one or more disc openers 114, a set of gauge wheels 116, and a set of closing wheels 118. Seeds from tank 112 are fed into a seed meter 124, e.g., by gravity or from a centralized commodity distribution system (e.g., providing pneumatic commodity distribution to each row unit). The seed meter 124 controls the rate at which seeds are dropped into a seed tube 120 or other seed delivery system, such as a brush belt or flighted belt, from seed storage tank 112. The seeds can be sensed by a seed sensor 122.

In the example shown in FIG. 3, liquid material is passed, e.g., pumped or otherwise forced, through one or more supply lines 111 to an inlet end of each applicator 109. Each applicator 109 is controlled by control system 113 to allow the liquid to pass from the inlet end of applicator 109 to an outlet end. Material application control system 113 senses the ground speed of row unit 106 (e.g., by sensing the ground speed of towing vehicle 94 or in another way) and varies the control signal controlling applicator 109 based on the ground speed to maintain a desired application pattern. One example of the application of material through an applicator 109 will be discussed but it will be appreciated that the row unit 106 may have a plurality of independently controllable applicators 109 so one or more materials can be applied at different rates or according to different application patterns (e.g., continuously, overlapping, intermittently, etc.). By mentioning that the different applicators are actuated to apply material according to a different application pattern it is meant, for example, that one applicator is controlled to apply material at a different rate than another applicator, or that one applicator applies material according to one spatial pattern (such as continuously, or overlapping) that is different from a spatial pattern with which another applicator applies material (such as intermittently).

As liquid passes through each applicator 109, the liquid travels through an application assembly 117 from a proximal end (which is attached to an outlet end of each flow control valve 300 in each applicator 109) to a distal tip (or application tip) 119 (which may form the exit orifice or spray tip 302 shown in FIG. 2), where the liquid is discharged into a trench, or proximate a trench or furrow 162, opened by disc opener 114.

Some parts of row unit 106 will now be discussed in more detail. First, it will be noted that there are different types of seed meters 124, and the one that is shown is shown for the sake of example only. However, in one example, each row unit 106 need not have its own seed meter. Instead, metering or other singulation or seed dividing techniques can be performed at a central location, for groups of row units 106. The metering systems can include finger pick-up discs and/or vacuum meters (e.g., having rotatable discs, rotatable concave or bowl-shaped devices), among others. The seed delivery system can be a gravity drop system (such as seed tube 120 shown in FIG. 3 in which seeds are dropped through the seed tube 120 and fall (via gravitational force) through the seed tube and out the outlet end 121 into the seed trench 162. Other types of seed delivery systems may be or may include assistive systems, in that they do not simply rely on gravity to move the seed from the metering system into the ground. Instead, such assistive systems actively assist the seeds in moving from the meter to a lower opening, where the seeds exit or are deposited into the ground or trench. The assistive systems can be systems that physically capture the seed and move the seed from the meter to the outlet end of the seed delivery system or they can be pneumatic systems that pump air through the seed tube to assist movement of the seed. The air velocity can be controlled to control the speed at which the seed moves through the delivery system.

A downforce actuator 126 is mounted on a coupling assembly 128 that couples row unit 106 to toolbar 102. Down force actuator 126 can be a hydraulic actuator, a pneumatic actuator, a spring-based mechanical actuator or a wide variety of other actuators. In the example shown in FIG. 3 a rod 130 is coupled to a parallel linkage 132 and is used to exert an additional downforce (in the direction indicated by arrow 134) on row unit 106. The total downforce (which includes the force indicated by arrow 134 exerted by actuator 126, plus the force due to gravity acting on row unit 106 (and indicated by arrow 136) is offset by upwardly directed forces acting on closing wheels 118 (from ground 138) and disc opener 114 (again from ground 138). The remaining force (the sum of the force vectors indicated by arrows 134 and 136, minus the upward force on closing wheels 118 and opener 114 and the force on any other ground engaging component on the row unit (not shown), is the differential force. The differential force may also be referred to herein as the downforce margin. The downforce margin acts on the gauge wheels 116. This load can be sensed by a gauge wheel load sensor, which may be located anywhere on row unit 106 where it can sense that load. The gauge wheel load sensor can also be placed where it may not sense the load directly, but a characteristic indicative of that load. For example, the gauge wheel load sensor can be disposed near a set of gauge wheel control arms (or gauge wheel arm) 148 that movably mount gauge wheels 116 to shank 152 and control an offset between gauge wheels 116 and the discs in double disc opener 114, to control planting depth.

Arms (or gauge wheel arms) 148 illustratively abut against a mechanical stop (or arm contact member-or wedge) 150. The position of mechanical stop 150 relative to shank 152 can be set by a planting depth actuator assembly 154. Control arms 148 illustratively pivot around pivot point 156 so that, as planting depth actuator assembly 154 actuates to change the position of mechanical stop 150, the relative position of gauge wheels 116, relative to the double disc opener 114, changes, to change the depth at which seeds are planted.

In operation, row unit 106 travels generally in the direction indicated by arrow 160. The double disc opener 114 opens a furrow 162 in the soil 138, and the depth of the furrow 162 is set by planting depth actuator assembly 154, which, itself, controls the offset between the lowest parts of gauge wheels 116 and disc opener 114. Seeds are dropped through seed tube 120, into the furrow 162 and closing wheels 118 close the furrow 162, e.g., push soil back into the furrow 162.

As the seeds are dropped through seed tube 120, the seeds can be sensed by seed sensor 122. Some examples of seed sensor 122 are described in greater detail below. Some examples of seed sensor 122 may include an optical or reflective sensor, which includes a radiation transmitter component and a receiver component. The transmitter component emits electro-magnetic radiation, and the receiver component then detects the radiation and generates a signal indicative of the presence or absence of a seed adjacent to the sensor. In another example, row unit 106 may be provided with a seed firmer that is positioned to travel through furrow 162, after seeds are placed in furrow 162, to firm the seeds in place. A seed sensor can be placed on the seed firmer and generate a sensor signal indicative of a seed.

The present description proceeds with respect to the seed sensor being located to sense a seed passing it in seed tube 120, but this is for the sake of example only. Material application control system 113 illustratively receives a signal from seed sensor 122, indicating that a seed is passing sensor 122 in seed tube 120. Where an intermittent application pattern is used, system 113 then determines when to actuate applicators 109 so that material being applied through application assembly 117 (and out distal tip 119 of application assembly 117) will be applied at a desired location relative to the seed in trench or furrow 162. One brief example of the operation will be described now, by way of overview.

Material application control system 113 illustratively is programmed with, or detects a distance, e.g., a longitudinal distance, that the distal tip 119 is from the exit end 121 of seed tube 120. System 113 also illustratively senses, or is provided (e.g., by another component, such as a GPS unit or a tractor, etc.), the ground speed of row unit 106. As the row units 106 on an implement being towed by a prime mover (e.g., a tractor) may move faster or slower than the tractor during turns, particularly as the width of the implement increases, the material application control system 113 may sense, compute, or be provided the ground speed of each row unit 106 of the implement. By way of example, the material application control system 113 may sense or be provided information when the implement is turning right indicating that the rightmost row unit 106 is travelling slower, i.e., has a lower ground speed, than the leftmost row unit 106. Further, the material application control system 113 detects, is provided, or is programmed with, system data indicating the responsiveness of applicators 109 under certain conditions (such as under certain temperature conditions, certain humidity conditions, certain elevations, when spraying a certain type of fluid, etc.) and the spray angle of applicators 109, (such as the size and orientation of the spray pattern emitted by applicator 109), and system 113 also detects, is provided, or programmed with one or more properties of the material being applied through applicators 109 (as this may affect the speed at which applicators 109 respond, the time it takes for the material to travel through application assembly 117 to the distal tip 119 and be applied to furrow 162, etc.). Further, material application control system 113 illustratively detects (or is provided with a sensor signal indicative of) the forward speed of row unit 106 in the direction generally indicated by arrow 160. Application control system 113 can also obtain information indicative of the duty cycle used to control applicator 109.

With this type of information, once system 113 receives a seed sensor signal indicating that a seed is passing sensor 122 in seed tube 120, system 113 determines the amount of time it will take for the seed to drop through the outlet end of seed tube 120 and into furrow 162 to reside at its final seed location and position in furrow 162. System 113 then determines when tip 119 will be in a desired location relative to that final seed location and actuates applicators 109 using a pulse width modulated control signal with a switching frequency (given the signal duty cycle) that will apply the material at the desired location. By way of example, it may be that some material is to be applied directly on the seed. In that case, the system 113 times the actuation of applicators 109 so that the applied material will be applied at the seed location. In another example, it may be desirable to apply some material at the seed location and a predetermined distance on either side of the seed location along the furrow. In that case, system 113 generates the control signal used to control applicators 109 at a switching frequency and timing so that the material is applied in the desired fashion. In other examples, it may be that the material is to be applied at a location between seeds in furrow 162. By way of example, relatively high nitrogen fertilizer may be most desirably applied between seeds, instead of directly on the seed. In that case, system 113 has illustratively been programmed with the desired location of the applied material, relative to seed location, so that system 113 can determine when, and at what frequency, to generate the control signal to actuate the control valves 300 in applicators 109 in order to apply the material between seeds. Further, as discussed above, the valves 300 in applicators 109 can be actuated to dispense material at a varying rate. Applicators 109 can dispense more material on the seed location and less at locations spaced from the seed location, or vice versa, or according to other application patterns. Different applicators 109 on the same row unit 106 can apply the same or different materials according to the same or different application patterns.

It will be noted that a wide variety of different configurations are contemplated herein. For instance, in one example, applicators 109 may each have a valve 300 that is provided with material through a separate supply line 111 and may have a separate distal spray tip or nozzle 119. The valve 300 in each applicator 109 may be placed closer to the distal spray tip or nozzle 119 (such as indicated by applicator locations 109A and 109C). In this way, there is less uncertainty as to how long it will take the material to travel from the valves 300 in applicators 109A and 109C to the corresponding distal spray tip or nozzle 119. In yet another example, the valves 300 in applicators 109 are disposed at a different location (such as on seed tube 120) as indicated by applicators 109B and 109D. In those scenarios, again, applicator locations 109B and 109D are closer to the corresponding distal spray tip or nozzle 119B and the material may be applied before and/or after the seed drops into furrow 162. For instance, when seed sensor 120 detects a seed, system 113 may be able to actuate the valve 300 in applicator 109B to apply material to furrow 162, before the seed exits the exit end 121 of seed tube 120 while continuously actuating a separate valve 300 in applicator 109D which is fed material by a separate supply line 111 from applicator 109B. However, by the time the seed drops through distal end 121 of seed tube 120, the final seed location may be directly on the material applied by applicator 109B. In yet another example, system 113 can control the valve 300 in applicator 109B so that it applies material but then stops applying it before the seed exits distal end 121, again while actuating the valve 300 in applicator 109D to continuously apply material. In that case, the material may be applied continuously in furrow 162 by applicator 109D and at a location behind the seed in furrow 162, relative to the direction indicated by arrow 160, by applicator 109B. This actuation timing and frequency enables the one or more materials to be applied between seeds, on seeds, continuously, overlapping, and/or elsewhere. All of these and other configurations are contemplated herein.

As discussed above with respect to FIG. 2, the applicator(s) 109 have a valve output pressure sensor 306 that senses the pressure downstream of the valve 300 in an applicator 109. The sensor signal(s) are provided back to system 113 which generates an output indicative of whether spray tip 119 is blocked, partially blocked, missing, or operating properly, as described in greater detail elsewhere.

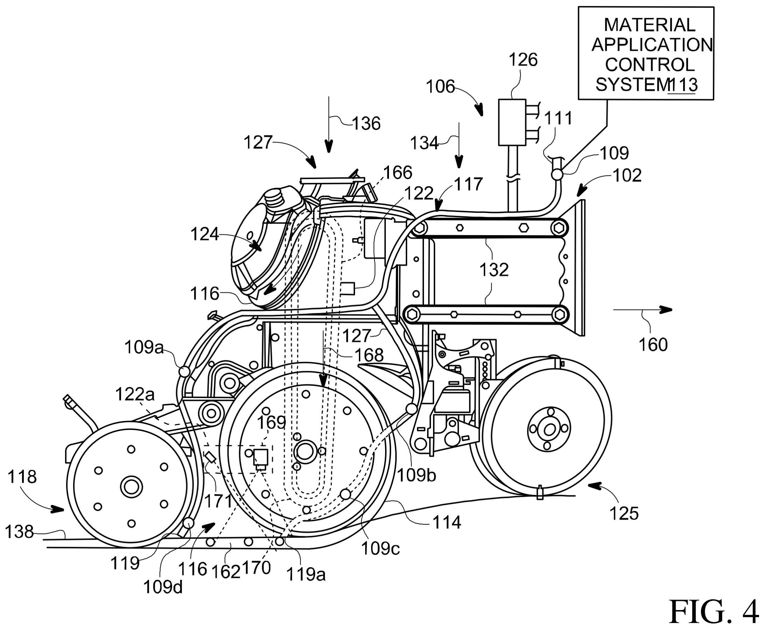

FIG. 4 is similar to FIG. 3, and similar items are similarly numbered. However, instead of the seed delivery system being a seed tube 120, which relies on gravity to move the seed to the furrow 162, the seed delivery system shown in FIG. 4 is an assistive seed delivery system 166. Also, FIG. 4 shows that row unit 106 has row cleaner 125 which clears residue and other material ahead of opener 114. In FIG. 4, row unit 106 also has a seed hopper 127 that provides seed to seed meter 124. Assistive seed delivery system 166 also illustratively has a seed sensor 122 disposed therein. Assistive seed delivery system 166 captures the seeds as they leave seed meter 124 and moves them in the direction indicated by arrow 168 toward furrow 162. System 166 has an outlet end 170 where the seeds exit assistive system 166, into furrow 162, where they again reach their final resting location.

FIG. 4 also shows that row unit 106 may have an optical seed sensor 122A (in addition to, or instead of, seed sensor 122) with an image capture device 169 and an illumination source 171. When the seeds are dropped into furrow 162, the seeds can be sensed by seed sensor 122A. Illumination source 142 may direct illumination onto an area of furrow 162. Camera 169 captures an image (or a sequence of images) of the illuminated area. An image processing system (located on sensor 122A, material application control system 113, at a remote location, and/or elsewhere) processes the image(s) to identify planting characteristics, such as seed location, seed type, seed orientation, seed (or furrow) depth, seed spacing, seed-to-soil contact, furrow integrity, anomalous material (such as rocks, plant matter, etc.), and/or other planting characteristics. The optical seed sensor 122A can be placed in a variety of different locations on row unit 106, or on different components of row unit 106, to obtain an image (or a sequence of images) of seeds in furrow 162. In a system where seed sensor 122 is used, material application control system 113 considers the speed at which delivery system 166 moves the seed from seed sensor 122 to the exit end 170.

System 113 also illustratively considers the speed at which the seed moves from the exit end 170 into furrow 162. For instance, in one example the seed simply drops from exit end 170 into furrow 162 under the force of gravity. In another example, however, the seed can be ejected from delivery system 166 at a greater or lesser speed than that which would be reached under the force of gravity. Similarly, it may be that the seed drops straight downward into furrow 162 from the outlet end 170. In another example, however, it may be that the seed is propelled slightly rearwardly from the outlet end 170, to accommodate for the forward motion of the row unit 106, so that the travel path of the seed is more vertical and so the seed rolls less once it reaches the furrow. Further, the seed can be ejected rearwardly and trapped against the ground by a trailing member (such as a pinch wheel) which functions to stop any rearward movement of the seed, after ejection, and to force the seed into firm engagement with the ground.

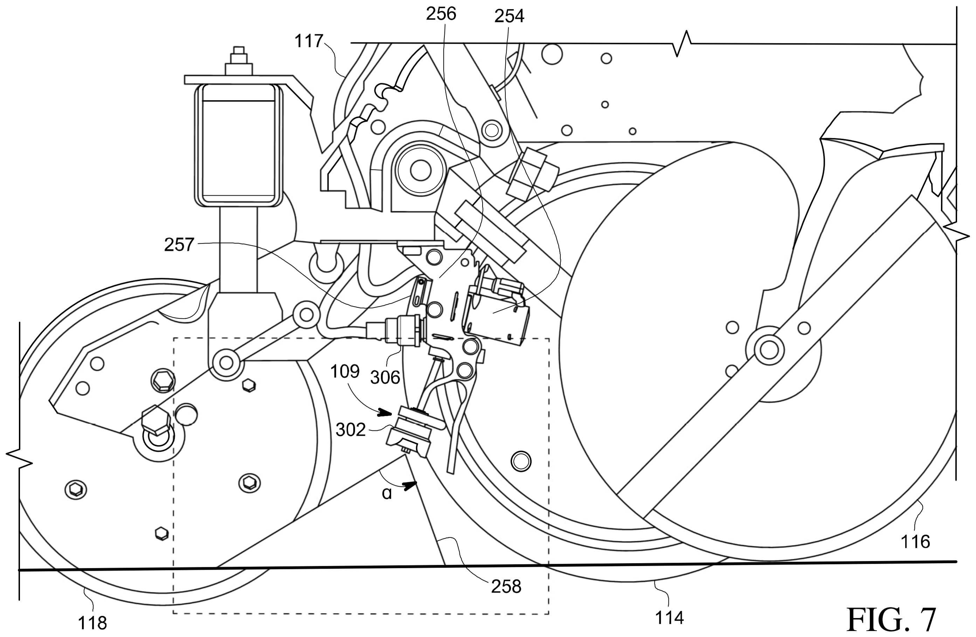

Again, FIG. 4 also shows that a plurality of applicators 109 can be placed at any of a wide variety of different locations, some of which are illustrated by numbers 109A, 109B, 109C, and 109D. In another example, as discussed in greater detail below with respect to FIG. 7, an applicator 109 can be mounted in place of or closely proximate device 169.

Where optical seed sensor 122A is used, material application control system 113 illustratively receives a signal from seed sensor 122A, indicating the planting characteristics discussed above, or other planting characteristics. Material application control system 113 can also receive a ground speed signal indicative of a speed of movement of row unit 106, and then determines when, and at what frequency, to independently actuate the different actuators in the applicators 109 on row unit 106 so that material being applied through application assemblies 117 (and out distal tips 119 of application assemblies 117) will be applied at a desired location relative to the seed in trench or furrow 162, or according to a desired application pattern, and/or based on other planting characteristics identified by processing the image(s) captured by optical seed sensor 122A. There can be more than one seed sensor, seed sensors of different types, different locations for seed sensors, etc.

At least some of the applicator(s) 109 have a valve output pressure sensor 306 that senses the pressure downstream of the valve 300 and provides an output signal indicative of the sensed pressure. The sensor signal(s) are provided back to system 113 which generates an output indicative of whether spray tip 119 (i.e., exit orifice 302) is blocked, partially blocked, missing, or operating properly, as described in greater detail elsewhere.

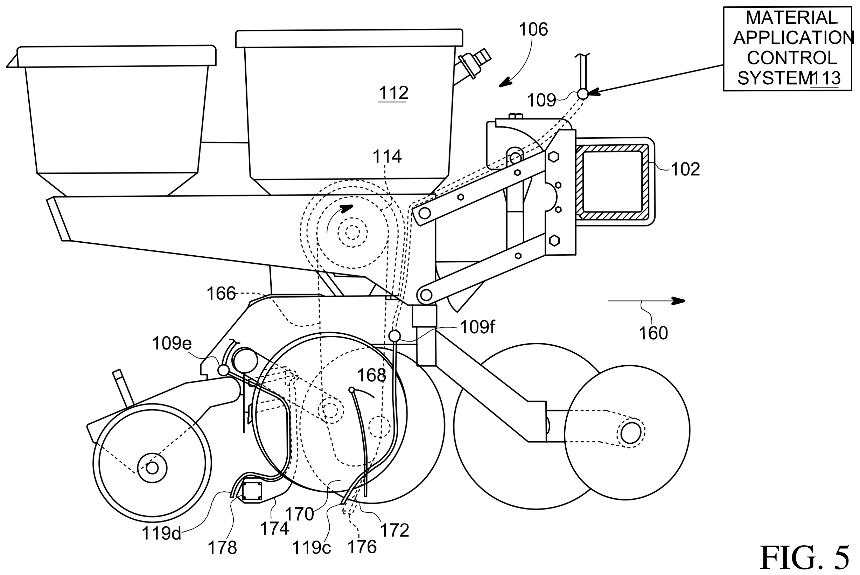

FIG. 5 is similar to FIG. 4 and similar items are similarly numbered. However, in FIG. 5, row unit 106 is also provided with members 172 and/or 174. Members 172 and/or 174 can be spring biased into engagement with the soil or rigidly attached to the frame of row unit 106. In one example, member 172 can be a furrow shaper, which contacts the soil in the area within or closely proximate the furrow, and immediately after the furrow is opened, but before the seed is placed therein. Member 172 can thus contact the side(s) of the furrow, the bottom of the furrow, an area adjacent to the furrow, or other areas. It can be fitted with a sensor 176, e.g., seed sensor 176, as well.

In another example, member 172 can be positioned so that member 172 moves through the furrow after the seed is placed in the furrow. In such an example, member 172 may act as a seed firmer, which firms the seed into its final seed location.

In either case, member 172 can include a seed sensor 122, which senses the presence of the seed. Seed sensor 122 may be an optical sensor, which optically senses the seed presence as member 172 moves adjacent to, ahead of, or over the seed. Sensor 122 may be a mechanical sensor that senses the seed presence, or sensor 122 may be another type of sensor that senses the presence of the seed in the furrow. Sensor 122 illustratively provides a signal to material application control system 113 indicating the presence of the sensed seed.

In such an example, it may be that the plurality of applicators 109 on the row unit 106 are placed at the location of applicator 109E, shown in FIG. 5, and the spray tip or nozzle 302 of the application assemblies corresponding to each applicator is shown at 119C. In the example shown in FIG. 5, outlet ends or nozzles 119C can be located closely behind member 172 relative to the direction indicated by arrow 160. Outlet ends or nozzles 119C can be disposed on the opposite side of member 172 as well (such as forward of member 172 in the direction indicated by arrow 160). In such an example, the seed sensor 122 senses the seed at a location that corresponds to its final seed location, or that is very closely proximate its final seed location. This location may increase the accuracy with which seed sensor 122 senses the final seed location.

Also, in the example shown in FIG. 5 row unit 106 can have member 174 in addition to, or instead of, member 172. Member 174 can also be configured to engage the soil within, or closely proximate, the trench or furrow. Member 174 can have a seed sensor 122 that senses the presence of a seed (or a characteristic from which seed presence can be derived). Member 174 can be placed so that it closely follows the exit end 121 of the seed tube 120, or the exit end 170 of the assistive delivery system 166. Also, applicators 109 (or valves 300 or other portions of applicators 109) can be placed at the position illustrated at 109F.

Applicator(s) 109 have a valve output pressure sensor 306 that senses the pressure downstream of the valve 300 and provides an output signal indicative of the sensed pressure. The sensor signal(s) are provided back to system 113 which generates an output indicative of whether spray tip 119 (or exit orifice 302) is blocked, partially blocked, missing, or operating properly, as described in greater detail elsewhere.

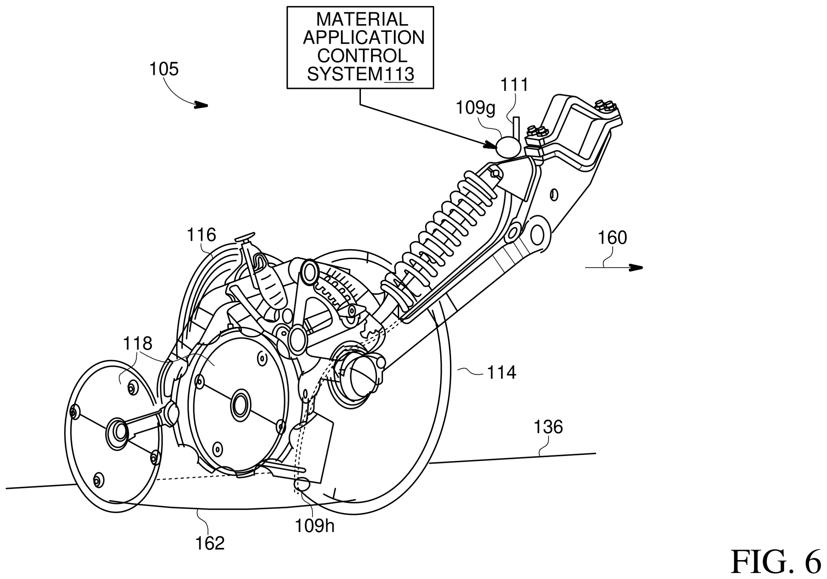

FIG. 6 is a side perspective view of an applicator unit 105. Some items are similar to those shown in other FIGS. and those items are similarly numbered. Briefly, in operation, applicator unit 105 attaches to a side-dress bar that is towed behind a towing vehicle 94, so unit 105 travels between rows (if the rows are already planted). However, instead of planting seeds, applicator unit 105 applies material at a location between rows of seeds (or, if the seeds are not yet planted, between locations where the rows will be, after planting). When traveling in the direction indicated by arrow 160, disc opener 114 (in this example, it is a single disc opener) opens furrow 162 in the ground 136, at a depth set by gauge wheel 116. Applicator unit 105 can have a plurality of independently controllable applicators 109. When applicators 109 are actuated, material is applied in furrow 162 and closing wheels 118 then close the furrow 162.

As unit 105 moves, material application control system 113 controls applicators 109 to dispense material. This can be done relative to seed or plant locations, if those locations are sensed or are already known or have been estimated. Application can also be done before the seed or plant locations are known. In this latter scenario, the locations where the material is applied can be stored so that seeds can be planted later, relative to the locations of the material that has been already dispensed.

FIG. 6 shows that applicators 109, or components of applicators 109, can be mounted to any of a plurality of different positions on unit 105. Two of the positions are shown at 109G and 109H. These are examples and the applicators 109 can be located elsewhere as well. Similarly, multiple applicators 109 can be disposed on unit 105 at different locations, or adjacent one another, to dispense multiple different materials or to dispense material in a more rapid or more voluminous way or to dispense the same material at different rates or according to different application patterns. Applicator(s) 109 have a valve output pressure sensor 306 that senses the pressure downstream of the valve 300 and provides an output signal indicative of the sensed pressure. The sensor signal(s) are provided back to system 113 which generates an output indicative of whether spray tip 119 (or nozzle 302) is blocked, partially blocked, missing, or operating properly, as described in greater detail elsewhere.

FIG. 7 shows an enlarged view of a portion of row unit 106 illustrated in FIG. 4, and similar items are similarly numbered. In FIG. 7, applicator 109 is shown having a spray tip or nozzle 302 and a valve actuator 254 that actuates a valve 300 within housing 256. The valve 300 is fed liquid material through a flow inlet 257 coupled to a conduit in application assembly 117. When actuator 254 is actuated to open the valve 300, liquid material passes through the conduit in application assembly 117, through the valve 300, and out through nozzle 302. In the example shown in FIG. 7, nozzle 302 generates a spray pattern indicated by number 258. The spray pattern spreads over a spray angle α. FIG. 7 also shows valve output pressure sensor 306 positioned to sense fluid pressure downstream of valve 300.

When configured as shown in FIG. 7, applicator(s) 109 have a valve output pressure sensor 306 that senses the pressure downstream of the valve 300 in applicator 109 and provides an output signal indicative of the sensed pressure. The sensor signal(s) and flow meter output signal(s) are provided back to system 113 which generates an output indicative of whether nozzle 302 (or spray tip 119) is blocked, partially blocked, missing, or operating properly, as described in greater detail elsewhere.

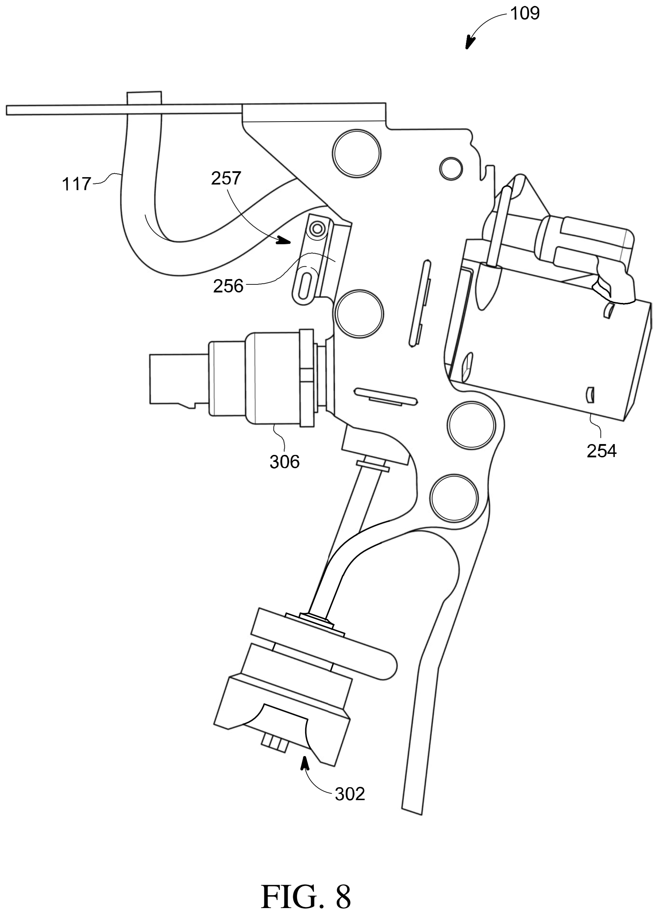

FIG. 8 is an enlarged view of applicator 109 showing flow inlet 257, valve housing 256, and actuator 254, as well as spray tip or exit orifice 302 and pressure sensor 306. It may happen that, because of the location of applicator 109 and the environment in which applicator 109 operates liquid and dust or debris can accumulate on spray tip or exit orifice 302 and block or partially block the spray tip or exit orifice 302. Similarly, spray tip or exit orifice 302 may become damaged or get knocked off or broken off applicator 109 resulting in unrestricted flow between valve 300 in valve housing 256 and the outlet end of applicator 109. Therefore, applicators 109 have valve output pressure sensor 306 disposed between valve 300/housing 256 and the nozzle or spray tip or exit orifice 302. The sensed pressure will change in response to actuation of valve 300 and in response to a blockage or partial blockage of spray tip or exit orifice 302 and/or in response to spray tip or exit orifice 302 being damaged or missing. The sensor signal(s) are provided back to system 113 which generates an output indicative of whether spray tip or exit orifice 302 is blocked, partially blocked, missing, or operating properly, as described in greater detail elsewhere.

An applicator state detection system in system 113 can thus detect the state of applicator 109 based on the pressure signals from the pressure sensor, and a control signal generator can generate a corresponding control signal.

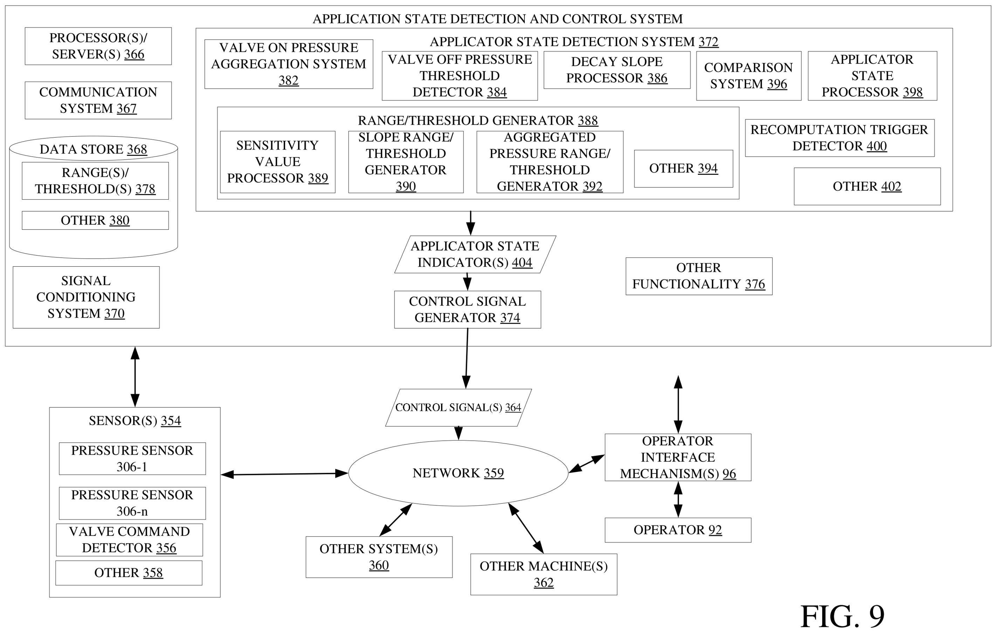

FIG. 9 is a block diagram showing one example of an agricultural system or architecture 492 which includes application state detection and control system 321. Some items are similar to those shown in previous FIGs. and they are similarly numbered. FIG. 9 shows that application state detection and control system 321 receives one or more sensor signals from one or more sensors 354. Sensors 354 can include pressure sensors 306-1 to 306-N, valve command detector 356, and other sensors 358. Pressure sensors 306-1 to 306-N generate pressure signals as discussed above. Valve command detector 356 detects commands issued to the flow control valves 300. Thus, valve command detector 356 may detect whether flow control valves 300 are being controlled to open or to close. There may be a separate valve command detector 356 corresponding to each flow control valve 300, or there may be one valve command detector 356 configured to detect the control signals corresponding to a set of flow control valves 300, where the set of flow control valves 300 are controlled in common.

Application state detection and control system 321 can also be in communication with operator interface mechanisms 96 either directly or over a network 359. Further, application state detection and control system 321 can communicate with other systems 360 and/or other machines 362 over network 359 or in other ways. Based upon the various inputs, application state detection and control system 321 identifies a state of each of the applicators 109 in fluid application system 307 (e.g., the state of each of the applicators 109 on each of the row units 106) and can generate control signals 364 based upon the detected applicator state. The control signals 364 may be provided to fluid application system 307 (shown in FIG. 2), to flow control system 318 (also shown in FIG. 2), to operator interface mechanisms 96, to other systems 360, and/or to other machines 362.

In the example shown in FIG. 9, application state detection and control system 321 includes one or more processors or servers 366, communication system 367, data store 368, sensor signal conditioning system 370, application state detection system 372, control signal generator 374, and other functionality 376. Data store 368 can include ranges or thresholds 378 (which may be predetermined or default ranges or thresholds, ranges or thresholds computed during runtime, or other ranges or thresholds), and any of a wide variety of other items 380. Applicator state detection system 372 can include valve ON pressure aggregation system 382, valve OFF pressure threshold detector 384, decay flow processor 386, range/threshold generator 388 (which can include sensitivity value processor 389, slope range/threshold generator 390, aggregated pressure range/threshold generator 392, and other items 394), comparison system 396, applicator state processor 398, re-computation trigger detector 400, and other items 402. Before describing the operation of application state detection and control system 321 in more detail, a description of some of the items in application state detection and control system 321, and their operation, will first be provided.

Network 359 may be a wide area network, a local area network, cellular communication network, a Wi-Fi or Bluetooth network, a near field communication network, or any of wide variety of other networks or combinations of networks.

Other systems 360 can include farm manager systems, vendor systems, maintenance systems, cloud-based systems or any of a wide variety of other systems. Other machines 362 can include towing vehicle 94, tender vehicles, other planting machines, and/or any of wide variety of other machines.

Communication system 367 facilitates the communication of items in application state detection and control system 321 with one another and may facilitate communication with other systems 360 or other machines 362 directly or over network 359. Therefore, communication system 367 may be a controller area network (CAN) bus and bus controller, a cellular communication system, a near field communication system, a Bluetooth or Wi-Fi communication system, a wide area network communication system, a local area network communication system, or any of a wide variety of other communication systems or combinations of systems.

Sensor signal conditioning system 370 may receive input signals from various different sensors 354. Sensor signal conditioning system 370 can perform any of a wide variety of conditioning on those signals, such as amplification, normalization, aggregation (e.g., averaging, generating a rolling average, etc.), filtering, and/or other conditioning.

Applicator state detection system 372 receives signals from sensors 354 and may also access ranges/thresholds 378 from data store 368 or elsewhere and identify the state of each applicator 109. The state may identify that the applicator is blocked, partially blocked, has unrestricted flow (e.g., the spray tip 302 is missing), or is applying material normally or as desired. Applicator state detection system 372 generates applicator state indicators 404 which indicate the state of each of the applicators 109.

To generate applicator state indicators 404, valve ON pressure aggregation system 382 receives signals from pressure sensors 306-1 to 306-N as well as the signal from valve command detector 356. Valve ON pressure aggregation system 382 generates an output, corresponding to each applicator, indicative of an aggregated pressure value (e.g., an average pressure value) sensed when the valve command detector 356 indicates that the corresponding flow control valve 300 is open or ON. In one example, there may be a system delay (electrical delay, mechanical delay, etc.) between when a command signal is issued to a flow control valve 300 commanding the flow control valve 300 to turn ON and when the flow control valve 300 actually turns ON. Similarly, there may be a system delay between when a command signal is issued to the flow control valve 300 commanding the flow control valve 300 to turn OFF and when the flow control valve actually turns OFF. Therefore, valve ON pressure aggregation system 382 may wait for a delay time period (e.g., 5 ms) after the command is issued to turn the valve 300 ON before system 382 begins aggregating sensed pressure values. Similarly, the pressure aggregation system 382 may wait for a delay time. (e.g., 5 ms) after the command is issued to turn the valve 300 OFF before ceasing to aggregate the sensed pressure signal values. Delaying the aggregation of sensed pressure values by the delay time accommodates for the system delay.

Valve OFF pressure threshold detector 384 detects the sensed pressure values, over time, after the valve 300 is turned OFF, until the pressure values decay to a threshold value. Thus, valve OFF pressure threshold detector 384 can sample the pressure sensor signal at a sampling rate so that the sampled pressure signals can indicate how quickly the sensed pressure decays to the threshold value. The decay slope processor 386 processes the slope of the decay in pressure indicated by the pressure values detected by valve OFF pressure threshold detector 384. The greater the slope, the faster the sensed pressure has decayed to the threshold value. The lower the slope, the slower the sensed pressure has decayed to the threshold value.

Range/threshold generator 388 processes the pressure values and/or slope decay values to identify thresholds and or ranges that can be used to determine the state of the applicators 109. The threshold(s) or range(s) can be set based on a desired sensitivity that may be a default value or a value input by the operator or obtained in another way. Sensitivity value processor 389 can access, compute, or otherwise identify the sensitivity value. Specifically, in one example, the slope range/threshold generator 390 can generate a range or threshold(s) that are used to determine whether the pressure values output by a particular pressure sensor 306 are outside of a normal range or beyond a threshold value (e.g., to determine whether an aggregated pressure or a decay slope for a given sensor 306 is an outlier). For instance, slope range/threshold generator 390 may process the decay slope values generated for all of the pressure sensors 306-1 to 306-N to identify a standard deviation in the decay slope values. That standard deviation may be used to set a range or threshold, beyond which a particular decay slope value corresponding to a particular sensor 300 can be deemed to be an outlier, potentially indicating a problematic applicator state. In another example, aggregated pressure range/threshold generator 392 processes the aggregated pressure values output by valve ON pressure aggregation system 382 to identify a range or set of thresholds that can be used to identify outliers. For instance, aggregated pressure range/threshold generator 392 may identify a standard deviation in the aggregated pressure values across all of the different pressure sensors 306-1 to 306-N. The standard deviation can be used to identify a range or a set of threshold values that can be used to identify outliers.

Comparison system 396 compares the aggregated pressure value output by valve ON pressure aggregation system 382, for each sensor 306-1 to 306-N, to the aggregated pressure range(s) or aggregated pressure threshold(s) output by generator 392 to determine where the aggregated pressure value for the corresponding sensor 306 falls relative to the range(s) or the threshold value(s). Comparison system 396 can also compare the decay slope corresponding to each of the pressure sensors 306-1 to 306-N to the range(s) or threshold(s) output by slope range/threshold generator 390 to determine where the decay slope corresponding to a particular sensor falls relative to the range(s) or the threshold(s).

Based upon the output by comparison system 396, applicator state processor 398 identifies an applicator state corresponding to each applicator 109. Applicator state processor 398 can generate an output (e.g., applicator state indicators 404) that identify the state corresponding to each applicator 109. For instance, if comparison system 396 generates an output indicating that the decay slope corresponding to pressure sensor 306-1 is below a range (or across a low threshold) set by slope range/threshold generator 390, then applicator state processor 398 may indicate that the applicator 109-1 (corresponding to sensed pressure sensor 306-1) is partially blocked because it is taking longer than expected for the pressure in the applicator 109-1 to decay after the flow control valve 300-1 is closed. Similarly, if the decay slope is within a range or threshold value(s) identified by slope range/threshold generator 390, then applicator state processor 398 may generate an applicator state indicator 404 for applicator 109-1 indicating that the applicator state is healthy or normal. The value of the decay slope can be compared to other ranges or thresholds to identify other applicator states as well.

In another example, if comparison system 396 generates an output indicating that the aggregate pressure value for pressure sensor 306-1 (e.g., the average pressure value sensed while flow control valve 300-1 is ON) is below a range or crossed a low threshold value output by aggregated pressure range/threshold generator 392, then applicator state processor 398 may provide an applicator state indicator 404 for applicator 109-1 indicating that the exit orifice or spray tip 302-1 is missing because, while the valve 300-1 was open, the sensed pressure was below what was expected. Similarly, if the aggregated pressure is within a range or threshold value(s) identified by aggregated pressure range/threshold generator 392, then applicator state processor 398 may generate an applicator state indicator 404 for applicator 109-1 indicating that the applicator state is healthy or normal. The value of the aggregated pressure can be compared to other ranges or thresholds to identify other applicator states as well.

These are just examples of different ways that applicator state processor 398 can process the output from comparison system 396 and generate an applicator state indicator 404 corresponding to each applicator 109-1 to 109-N.

There may be some scenarios where range/threshold generator 388 may desirably be triggered to recompute the ranges and/or thresholds to obtain more accurate values for use in determining applicator state. For example, where range/threshold generator 388 computes a standard deviation over a set of sensor signal values, and then comparison system 396 identifies outliers, it may be that range/threshold generator 388 should recompute the range and/or threshold, without the outliers, to obtain a more accurate representation of the range or threshold values that should be used in determining applicator state.

Therefore, in one example, recomputation trigger detector 400 detects trigger criteria indicating that the ranges and/or thresholds should be recomputed without the outlier values included in that computation. In one example, the recomputation trigger criteria may be based on the amount by which the outlier values are outside the current range or threshold values. Another set of recomputation trigger criteria may be that a relatively large number of outliers have been identified (e.g., a threshold number of outliers have been identified). When recomputation trigger detector 400 detects the presence of recomputation trigger criteria, then detector 400 generates an output to range/threshold generator 388 indicating that range/threshold generator 388 should recompute the ranges and/or threshold values, without the previously identified outliers. Comparison system 396 and applicator state processor 398 can then use the recomputed ranges and/or thresholds to identify additional outliers and generate and output applicator state indicators 404 for the applicators 109. Applicator state detection system 372 can provide the applicator state indicators 404 to control signal generator 374. Control signal generator 374 can generate control signals 364 based upon the applicator state indicators 404. Control signals 364 can be used to control communication system 367, operator interface mechanisms 96, flow control system 318 (shown in FIG. 2), fluid application system 307 (also shown in FIG. 2), and/or other items.

For instance, control signal generator 374 can generate a control signal 364 to control an operator interface mechanism, such as a screen, an alarm, or any other mechanism for providing an audio, visual, and/or haptic output to an operator 92. The output may identify a particular applicator 109 and the state of that applicator 109. The output may identify a potential problem (such as a blocked applicator, a partially blocked applicator, an applicator where the spray tip is missing, etc.). The output may provide diagnostic or tutorial information identifying how an operator may verify and/or fix any corresponding problem. The output can include a wide variety of other information as well.

Control signal generator 374 may generate a control signal 364 to control one or more applicators 109 or other items in fluid application system 307. For instance, when an applicator 109 is partially blocked, the control signal may instruct flow control system 318 to increase the frequency with which the corresponding valve 300 is actuated to increase the flow rate from the applicator 109, even though it is partially blocked. The control signal may control flow control system 318 to reduce the frequency of actuation of a valve 300 where the applicator 109 is missing the spray tip 302. Other control signals for controlling applicator 109 can be generated as well.

Control signal generator 374 can generate a control signal 364 to control central flow system 308. For instance, the control signal can be used to control pump 115 to increase or decrease system pressure, to stop pumping, or to control central flow system 308 in other ways.

Control signal generator 374 can generate control signals to control communication system 367 to communicate the state of the various applicators 109 to other systems 360, other machines 362, etc. For instance, where an applicator 109 is clogged or has a missing spray tip 302, control signal generator 374 may control the communication system 367 to communicate with a vendor indicating that a new spray tip 302 is needed to replace the damaged or missing spray tip. Control signal generator 374 can generate a wide variety of other control signals as well.

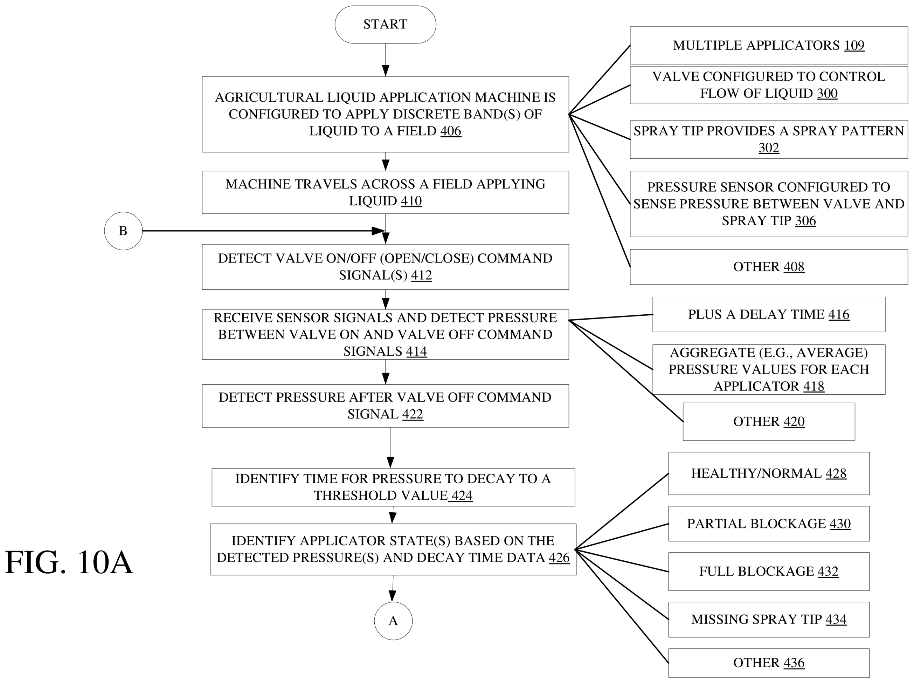

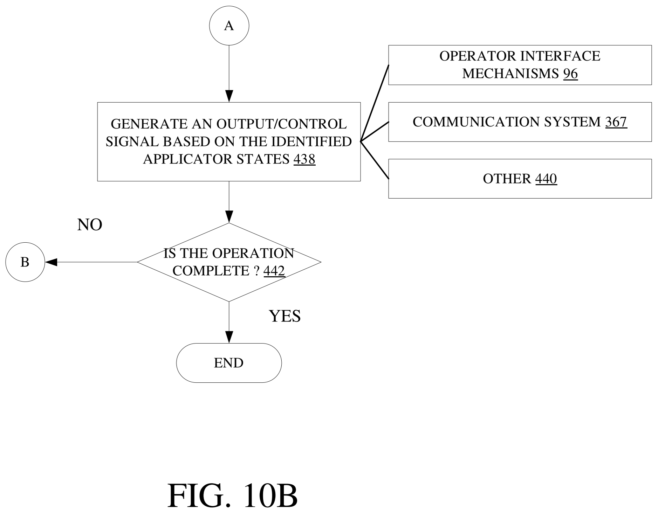

FIGs. 10A and 10B (collectively referred to herein as FIG. 10) illustrate a flow diagram showing one example of the operation of application state detection and control system 321. It is first assumed that an agricultural liquid application machine is configured to apply discrete bands of liquid to a field, as indicated by block 406. The application machine can include multiple applicators 109 and have a flow control valve 300 configured to control flow of liquid through each applicator 109. Each applicator 109 may have a spray tip or exit orifice 302 that applies the liquid according to a spray pattern. Each applicator 109 also has a pressure sensor 306 configured to sense liquid pressure between the flow control valve 300 and the spray tip 302. The agricultural liquid application machine can be configured in other ways as well, as indicated by block 408.

The liquid application machine (e.g., machine 100) travels across a field applying liquid, as indicated by block 410. Valve command detector 356 detects a valve ON/OFF (open/close) command signal provided to the different flow control valves 300. Detecting the valve ON/OFF signals is indicated by block 412 in FIG. 10. Valve ON pressure aggregation system 382 then receives signals from sensors 354 and detects pressure in each applicator 109 between the valve ON and valve OFF command signals, as indicated by block 414. For instance, valve ON pressure aggregation system 382 detects pressure values while the flow control valve 300 is open. In one example, the time period over which the pressure values are detected includes a delay time that accommodates for system delays in opening and closing the flow control valve 300, as indicated by block 416. Valve ON pressure aggregation system 382 can aggregate (e.g., average) the pressure values detected for each applicator 109, as indicated by block 418, or aggregate the pressure values in other ways, as indicated by block 420.

Valve OFF pressure threshold detector 384 then detects the pressure in the applicator 109 after the valve OFF command signal is issued (e.g., after the flow control valve 300 closes) as indicated at block 422. Valve OFF pressure threshold detector 384 also detects or identifies the time that it takes for the detected pressure to decay to a threshold value, as indicated by block 424.

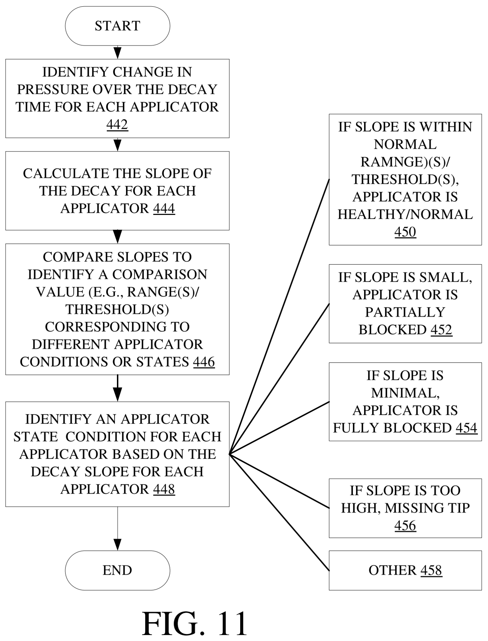

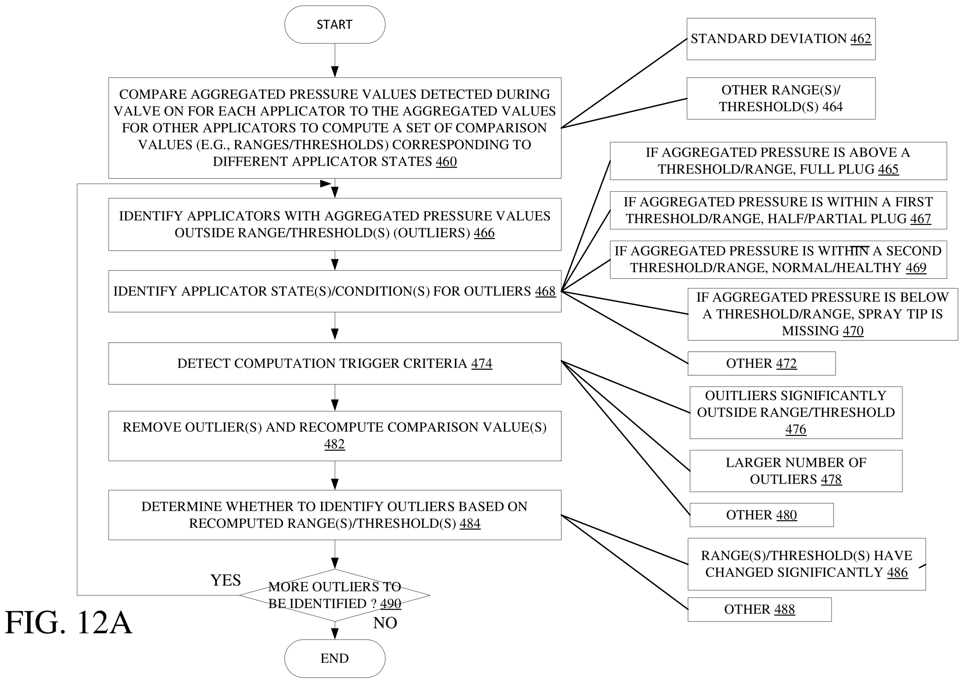

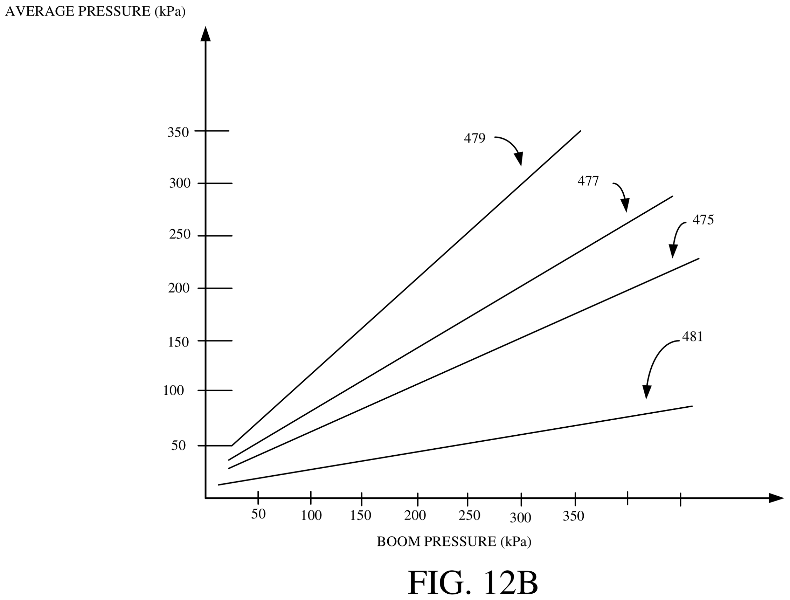

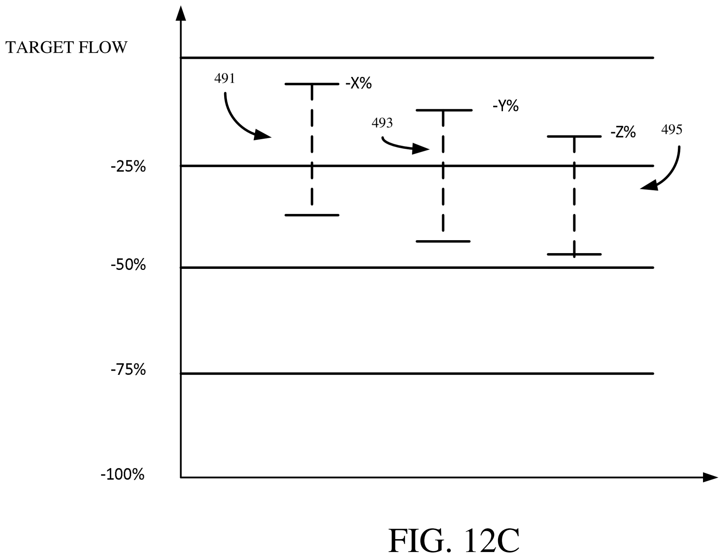

Based upon the pressures detected by system 382 and detector 384, applicator state detection system 372 identifies applicator states corresponding to each applicator 109, as indicated by block 426. The applicator states can be represented by applicator state indicators 404 and may indicate that the corresponding applicator is operating in a healthy or normal fashion 428, that the applicator 109 is partially blocked as indicated by block 430, fully blocked as indicated by block 432, that the exit orifice or spray tip 302 is missing, as indicated by block 434, or that any of a variety of other applicator states exist, as indicated by block 436. One example in which applicator state processor 398 processes the decay slope values to identify different applicator states is discussed below in more detail with respect to FIG. 11. Another example in which applicator state processor 398 processes the aggregated pressure values detected when the flow control valve 300 is open is discussed in greater detail below with respect to FIG. 12.

Control signal generator 374 then generates an output or control signal based upon the identified applicator states, as indicated by block 438. The control signals can be used to control operator interface mechanisms 96, to control communication system 367, or to control any of a wide variety of other actuators or systems, as indicated by block 440. Until the liquid application operation is complete, as determined at block 442, processing reverts to block 412 in the flow diagram of FIG. 10.

FIG. 11 is a flow diagram illustrating one example in which the pressure decay slope is used to identify a partial or full blockage or a missing exit orifice or spray tip 302. Valve OFF pressure threshold detector 384 first detects the time over which the pressure detected by the pressure sensor 306 decays from an initial value (detected just prior to when the valve is initially closed) to a threshold value, as indicated by block 442 in the flow diagram of FIG. 11. Based upon the pressure change over time, decay slope processor 386 calculates the slope of the pressure decay (the decay slope value) for each applicator 109, as indicated by block 444.

Slope range/threshold generator 390 then processes the decay slope values for the different applicators 109 to identify one or more ranges or threshold values (e.g., a standard deviation or other comparison value, etc.) corresponding to different applicator conditions, as indicated by block 446. Comparison system 396 then compares the decay slope value for each applicator 109 against the ranges or threshold values (or other comparison value) output by slope range/threshold generator 392 identify outliers (e.g., to identify which applicators 109 have corresponding decay slope values that lie outside the ranges or threshold values).

Applicator state processor 398 then processes the output of comparison system 396 to identify an applicator condition or applicator state for each applicator 109, as indicated by block 448. In one example, applicator state processor 398 determines whether the slope is within a normal range or meets a normal set of thresholds and, if so, generates an applicator state indicator 404 for that applicator 109 indicating that the applicator 109 is operating in a normal or healthy way, as indicated by block 450. In another example, applicator state processor 398 determines that the decay slope for a given actuator 109 is below a low threshold value but above a de minimis (or minimal) threshold value indicating that the applicator 109 is partially blocked, as indicated by block 452. In another example, applicator state processor 398 may generate an output indicating that the slope is below the de minimis threshold value indicating that the applicator 109 is fully blocked, as indicated by block 454. In yet another example, applicator state processor 398 may determine that the decay slope is above a high threshold value meaning that the applicator 109 is missing the spray tip 302, as indicated by block 456. Applicator state processor 398 can process the decay slope values in other ways to identify other applicator states or applicator conditions, as indicated by block 458 in the flow diagram of FIG. 11.

FIG. 12A is a flow diagram illustrating one example of the operation of application state detection and control system 321 in which the aggregate pressure values sensed while flow control valve 300 is open are used to identify different applicator states, such as whether an applicator 109 is operating normally, whether an applicator 109 is fully or partially blocked, or whether an applicator 109 has a missing exit orifice or spray tip 302, etc. It is assumed that valve ON pressure aggregation system 382 has aggregated (e.g., averaged) pressure values sensed while the flow control valve 300 is open for each of a plurality of different applicators 109. It is also assumed that sensitivity value processor has obtained a desired sensitivity value and that aggregated pressure range/threshold generator 392 has generated one or more ranges or thresholds (or other comparison values) for comparison, as indicated by block 460 in the flow diagram of FIG. 12A. The ranges or threshold values (or other comparison values) may be based on the desired sensitivity value, based on a computed standard deviation value 462 or based on any of a wide variety of other values 464. Comparison system 396 then compares the aggregated pressure values for each applicator 109 against the ranges or thresholds to identify applicators 109 with aggregated pressure values that are outside of or beyond one or more of the ranges/thresholds (e.g., comparison 396 identifies applicators 109 that are outliers). Identifying the outliers is indicated by block 466 in the flow diagram of FIG. 12A. Applicator state processor 398 identifies applicator states or applicator conditions for the identified outliers, as indicated by block 468 in the flow diagram of FIG. 12A. In the example illustrated in FIG. 12A, applicator state processor 398 identifies the applicators 109 that have an aggregated pressure value that is above a first threshold value or first range as being fully plugged, as indicated by block 465. Applicator state processor 398 can also identify applicators 109 that have an aggregate pressure value that is within a first range as being half or partially plugged, as indicated by block 467. Applicator state processor 398 can identify applicators 109 that have an aggregate pressure value that is within a second range as operating normally or operating in a healthy way, as indicated by block 469. Applicator state processor 398 can identify applicators 109 that have an aggregated pressure value below a threshold/range, as applicators that have a missing spray tip, as indicated by block 470. Applicator state processor 398 can identify other applicator states or applicator conditions for the outliers as well, as indicated by block 472.

FIG. 12B graphically illustrates one example of identifying different applicator states based upon different aggregate pressure values. FIG. 12B shows the boom pressure (the liquid pressure upstream of flow control valve 300) along the X axis and the aggregate pressure value sensed by the pressure sensor 306 plotted along the Y axis. Trace 475 represents aggregate pressure values corresponding to an applicator that is operating in a normal or healthy range. Trace 477 shows the aggregate pressure values for an applicator that is half plugged, or partially plugged Trace 479 shows aggregate pressure values for an applicator 109 that is fully plugged. It can thus be seen that the aggregate pressure values represented by trace 479 closely track the boom pressure values because, once flow control valve 300 is open, pressure sensor 306 is basically sensing the boom pressure. Trace 477 shows that the aggregate pressure values when the flow control valve 300 is open are between those for a healthy applicator (illustrated by trace 475) and those corresponding to a fully blocked applicator (those illustrated by trace 479). Trace 481 shows aggregate pressure values for an applicator that has unrestricted flow (such as a missing spray tip). It can thus be seen that the aggregate pressure values indicated by trace 481 are significantly below those for an applicator that is operating normally.

Also, the aggregate pressure values can be correlated to fluid flow rate through the applicator. For example, aggregate pressure values that show that the applicator is fully plugged can correspond to zero flow rate, or a reduction from the target flow rate of 100%. Aggregate pressure values that show that the applicator is half plugged correspond to a 50% reduction in flow rate from a target flow rate. Aggregate pressure values that correspond to a missing tip may correspond to a flow rate that is 25% greater than the target flow rate, etc It will also be noted that, in some examples, there may be relatively minor deviations in the aggregate pressure values, depending on the circumstances. Therefore, an operator or another system may wish to set a sensitivity value. The sensitivity value may indicate the level of deviations that an operator or another system is willing to tolerate. Therefore, if the sensitivity value is set to a relatively high level, then the ranges/thresholds used to identify applicator state can be generated so the operator may be notified of aggregate pressure values that indicate a flow rate that deviates from a target flow rate by a first amount. If the sensitivity value is set to an intermediate level, then the ranges/thresholds used to identify applicator state can be generated so the operator may be notified when the aggregate pressure values indicate that the flow rate deviates from the target flow rate by a second amount, in excess of the first amount. When the sensitivity value is set to a low level, then the ranges/thresholds used to identify applicator state can be generated so the operator will be notified of aggregate pressure values that indicate that the flow deviates from the target flow by a third amount that exceeds the second amount, and so on.

FIG. 12C shows one example of how different sensitivity values can affect the ranges and thresholds generated by range/threshold generator 388 and when the operator is notified. In FIG. 12C, the operator may set the sensitivity value to a first level 491 that indicates a high sensitivity level. In that case, if the aggregate pressure values indicate that the flow through an applicator 109 deviates from a target flow value by a first percent (X%) then an alarm condition can be generated so that the operator is notified. FIG. 12C shows that if the sensitivity level is set to a medium level 493, then the operator will not be notified unless the aggregate pressure values indicate that the flow through an applicator 109 deviates from the target flow value by a second percent (Y%). Further, if the sensitivity value is set to a low level 495, then the operator will not be notified until the flow through an applicator 109 deviates from the target flow by a third percent (Z%).

Referring again to the flow diagram in FIG. 12A, recomputation trigger detector 400 also detects the presence of recomputation trigger criteria, as indicated by block 474. For instance, recomputation trigger detector 400 may detect that a number of outliers are significantly outside of the range or thresholds, as indicated by block 476. By way of example, some of the outliers may be more than a threshold distance outside of the range or beyond the threshold values and may thus be significantly affecting the computation of the standard deviation or other value that is used to set the ranges or thresholds. In another example, recomputation trigger detector 400 may detect a large number of outliers (e.g., a number in excess of a threshold value), as indicated by block 478 in the flow diagram of FIG. 12A which, again, would significantly affect the computation of the standard deviation or other thresholds or ranges. It will also be noted that recomputation trigger detector 400 can detect other recomputation trigger criteria 480 as well.

Recomputation trigger detector 400 can generate a signal indicating that the ranges and threshold values should be recomputed without the outliers. That signal can be provided from detector 400 to range/threshold generator 388 which then removes the outliers and recomputes the ranges or thresholds, as indicated by block 482 in the flow diagram of FIG. 12A.

Comparison system 396 then determines whether it needs to identify outliers with respect to the recomputed ranges and/or thresholds, as indicated by block 484 in the flow diagram of FIG. 12A. For instance, if the ranges and/or thresholds have changed significantly (e.g., beyond the threshold amount), then comparison system 396 may determine that additional outliers should be identified based upon the recomputed ranges and/or thresholds. Identifying additional outliers based upon the recomputed ranges and/or thresholds, where the ranges and/or thresholds have changed significantly, is indicated by block 486 in the flow diagram of FIG. 12A. The comparison system 396 can determine that outliers should again be identified with respect to the recomputed ranges and/or thresholds in other ways as well, as indicated by block 488. If more outliers are to be identified, as determined at block 490, then processing reverts to block 466 where outliers are again identified based upon the recomputed ranges and/or thresholds.

It can thus be seen that the present description describes a system that uses characteristics of a pressure sensor signal generated by a pressure sensor (such as the average pressure value while the flow control valve is open, the pressure decay slope, etc.) to identify an applicator state corresponding to each applicator. This enhances the ability of the system to identify application errors or other applicator states that can be remedied to improve performance.

The present discussion has mentioned processors and servers. In one example, the processors and servers include computer processors with associated memory and timing circuitry, not separately shown. The processors and servers are functional parts of the systems or devices to which they belong and are activated by and facilitate the functionality of the other components or items in those systems.

It will be noted that the above discussion has described a variety of different systems, components, generators, sensors, and/or logic. It will be appreciated that such systems, components, generators, sensors, and/or logic can be comprised of hardware items (such as processors and associated memory, or other processing components, some of which are described below) that perform the functions associated with those systems, components, generators, sensors, and/or logic. In addition, the systems, components, generators, sensors, and/or logic can be comprised of software that is loaded into a memory and is subsequently executed by a processor or server, or other computing component, as described below. The systems, components, generators, sensors, and/or logic can also be comprised of different combinations of hardware, software, firmware, etc., some examples of which are described below. These are only some examples of different structures that can be used to form the systems, components, generators, sensors, and/or logic described above. Other structures can be used as well.

Also, a number of user interface (UI) displays have been discussed. The UI can take a wide variety of different forms and can have a wide variety of different user actuatable input mechanisms disposed thereon. For instance, the user actuatable input mechanisms can be text boxes, check boxes, icons, links, drop-down menus, search boxes, etc. The mechanisms can also be actuated in a wide variety of different ways. For instance, they can be actuated using a point and click device (such as a track ball or mouse). The mechanisms can be actuated using hardware buttons, switches, a joystick or keyboard, thumb switches or thumb pads, etc. The mechanisms can also be actuated using a virtual keyboard or other virtual actuators. In addition, where the screen on which they are displayed is a touch sensitive screen, the mechanisms can be actuated using touch gestures. Also, where the device that displays the mechanisms has speech recognition components, the mechanisms can be actuated using speech commands.

A number of data stores have also been discussed. It will be noted the data stores can each be broken into multiple data stores. All can be local to the systems accessing them, all can be remote, or some can be local while others are remote. All of these configurations are contemplated herein. Also, the figures show a number of blocks with functionality ascribed to each block. It will be noted that fewer blocks can be used so the functionality is performed by fewer components. Also, more blocks can be used with the functionality distributed among more components.

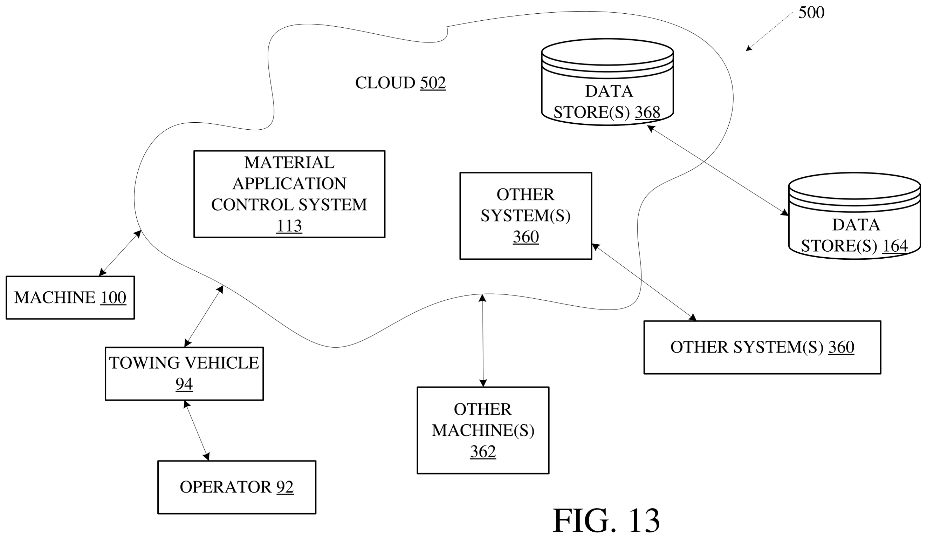

FIG. 13 is a block diagram of the architecture, shown in FIG. 1, except that planter 100 communicates with elements in a remote server architecture 500. In an example, remote server architecture 500 can provide computation, software, data access, and storage services that do not require end-user knowledge of the physical location or configuration of the system that delivers the services. In various examples, remote servers can deliver the services over a wide area network, such as the internet, using appropriate protocols. For instance, remote servers can deliver applications over a wide area network, and they can be accessed through a web browser or any other computing component. Software or components shown in other FIGs. as well as the corresponding data, can be stored on servers at a remote location. Computing resources in a remote server environment can be consolidated at a remote data center location or they can be dispersed. Remote server infrastructures can deliver services through shared data centers, even though they appear as a single point of access for the user. Thus, the components and functions described herein can be provided from a remote server at a remote location using a remote server architecture. Alternatively, the components and functions can be provided from a conventional server, or they can be installed on client devices directly, or in other ways.

In the example shown in FIG. 13, some items are similar to those shown in FIGS. 1-12 and they are similarly numbered. FIG. 13 specifically shows that material application control system 113 and data store 368, or other systems 360, or other items in agricultural system 90 can be located at a remote server location 502. Therefore, parts of system 113 can access those systems through remote server location 502. FIG. 13 also shows that other machines 362 and/or other systems 360 can communicate with remote server environment 502.

FIG. 13 also depicts another example of a remote server architecture. FIG. 13 shows that it is also contemplated that some elements of other FIGS. can be disposed at remote server location 500 while others are not. By way of example, data store 368 can be disposed at a location separate from location 500 and accessed through the remote server at location 500. Regardless of where the elements are located, the elements can be accessed directly by system 113, through a network (either a wide area network or a local area network), the elements can be hosted at a remote site by a service, or they can be provided as a service, or accessed by a connection service that resides in a remote location. Also, the data can be stored in substantially any location and intermittently accessed by, or forwarded to, interested parties. For instance, physical carriers can be used instead of, or in addition to, electromagnetic wave carriers. In such an example, where cell coverage is poor or nonexistent, another mobile machine (such as a fuel truck) can have an automated information collection system. As the planter or sprayer comes close to the fuel truck for fueling, the system automatically collects the information from the planter or sprayer using any type of ad-hoc wireless connection. The collected information can then be forwarded to the main network as the fuel truck reaches a location where there is cellular coverage (or other wireless coverage). For instance, the fuel truck may enter a covered location when traveling to fuel other machines or when at a main fuel storage location. All of these architectures are contemplated herein. Further, the information can be stored on the planter or sprayer until the planter or sprayer enters a covered location. The planter or sprayer itself can then send the information to the main network.

It will also be noted that the elements of other FIGS., or portions of them, can be disposed on a wide variety of different devices. Some of those devices include servers, desktop computers, laptop computers, tablet computers, or other mobile devices, such as palm top computers, cell phones, smart phones, multimedia players, personal digital assistants, etc.

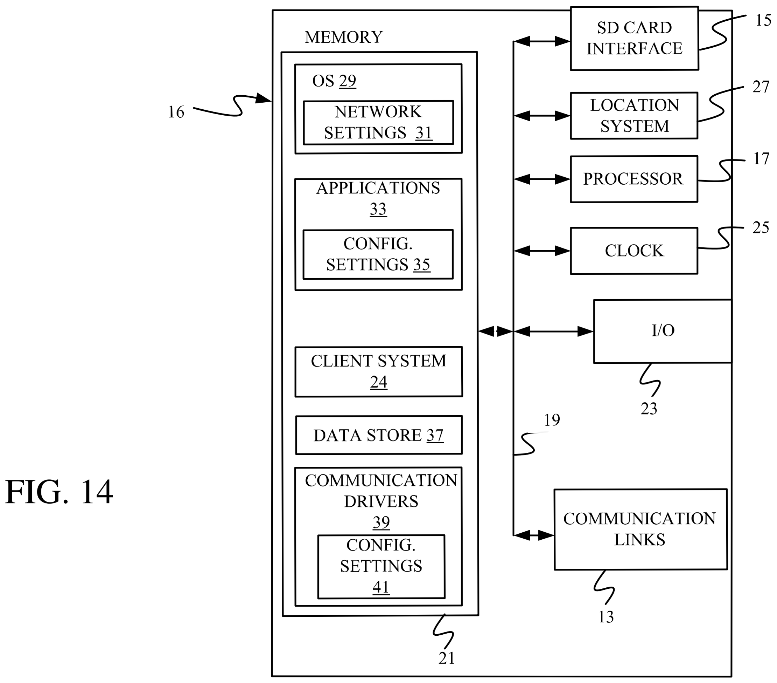

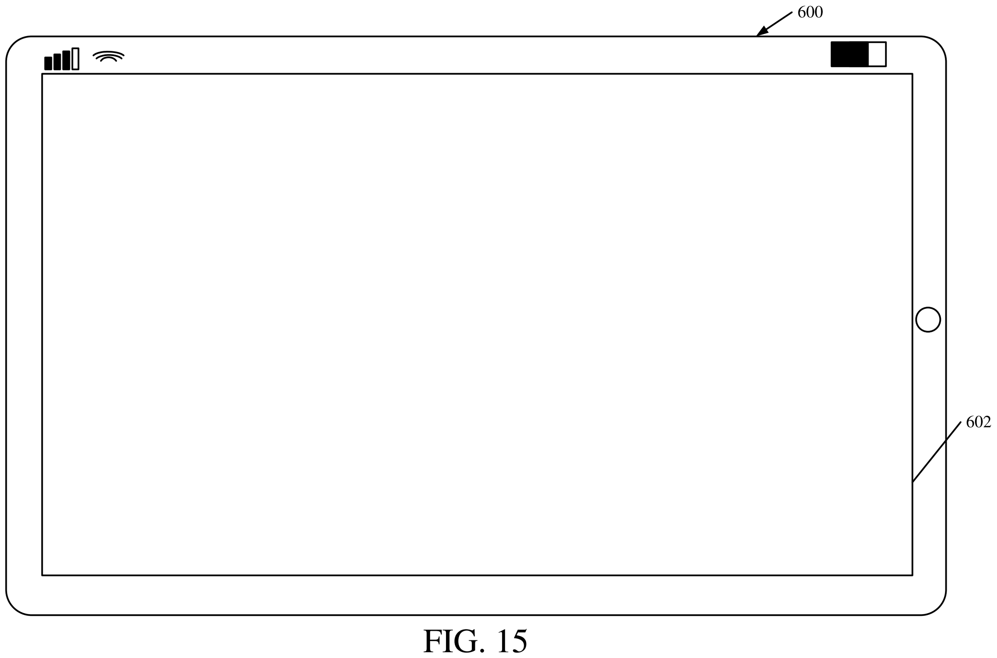

FIG. 14 is a simplified block diagram of one illustrative example of a handheld or mobile computing device that can be used as a user's or client's handheld device 16, in which the present system (or parts of it) can be deployed. For instance, a mobile device can be deployed in the operator compartment of towing vehicle 94 for use in generating, processing, or displaying the application data and/or the applicator states. FIGS. 15-16 are examples of handheld or mobile devices.

FIG. 14 provides a general block diagram of the components of a client device 16 that can run some components shown in other FIGS., that interact with those components, or both. In device 16, a communications link 13 is provided that allows the handheld device to communicate with other computing devices and in some examples provides a channel for receiving information automatically, such as by scanning. Examples of communications link 13 include allowing communication though one or more communication protocols, such as wireless services used to provide cellular access to a network, as well as protocols that provide local wireless connections to networks.

In other examples, applications can be received on a removable Secure Digital (SD) card that is connected to an interface 15. Interface 15 and communication links 13 communicate with a processor 17 (which can also embody processors from previous FIGS.) along a bus 19 that is also connected to memory 21 and input/output (I/O) components 23, as well as clock 25 and location system 27.

I/O components 23, in one example, are provided to facilitate input and output operations. I/O components 23 for various examples of the device 16 can include input components such as buttons, touch sensors, optical sensors, microphones, touch screens, proximity sensors, accelerometers, orientation sensors and output components such as a display device, a speaker, and or a printer port. Other I/O components 23 can be used as well.

Clock 25 illustratively comprises a real time clock component that outputs a time and date. It can also, illustratively, provide timing functions for processor 17.

Location system 27 illustratively includes a component that outputs a current geographical location of device 16. This can include, for instance, a global positioning system (GPS) receiver, a GNSS, a dead reckoning system, a cellular triangulation system, or other positioning system. Location system 27 can also include, for example, mapping software or navigation software that generates desired maps, navigation routes and other geographic functions.

Memory 21 stores operating system 29, network settings 31, applications 33, application configuration settings 35, data store 37, communication drivers 39, and communication configuration settings 41. Memory 21 can include all types of tangible volatile and non-volatile computer-readable memory devices. Memory 21 can also include computer storage media (described below). Memory 21 stores computer readable instructions that, when executed by processor 17, cause the processor to perform computer-implemented steps or functions according to the instructions. Processor 17 can be activated by other components to facilitate their functionality as well.

FIG. 15 shows one example in which device 16 is a tablet computer 644. In FIG. 15, computer 644 is shown with user interface display screen 646. Screen 646 can be a touch screen or a pen-enabled interface that receives inputs from a pen or stylus. Computer 644 can also use an on-screen virtual keyboard. Of course, computer 644 might also be attached to a keyboard or other user input device through a suitable attachment mechanism, such as a wireless link or USB port, for instance. Computer 644 can also illustratively receive voice input as well.

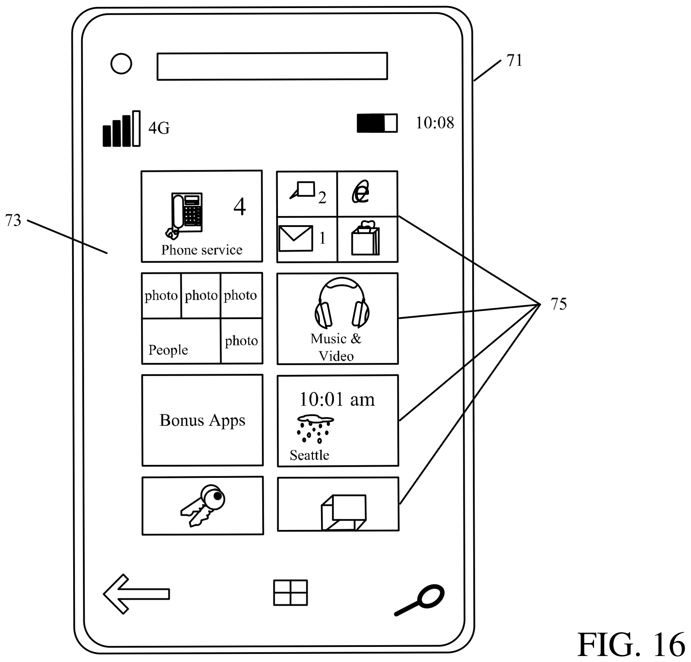

FIG. 16 shows that the device can be a smart phone 71. Smart phone 71 has a touch sensitive display 73 that displays icons or tiles or other user input mechanisms 75. Mechanisms 75 can be used by a user to run applications, make calls, perform data transfer operations, etc. In general, smart phone 71 is built on a mobile operating system and offers more advanced computing capability and connectivity than a feature phone.

Note that other forms of devices 16 are possible.

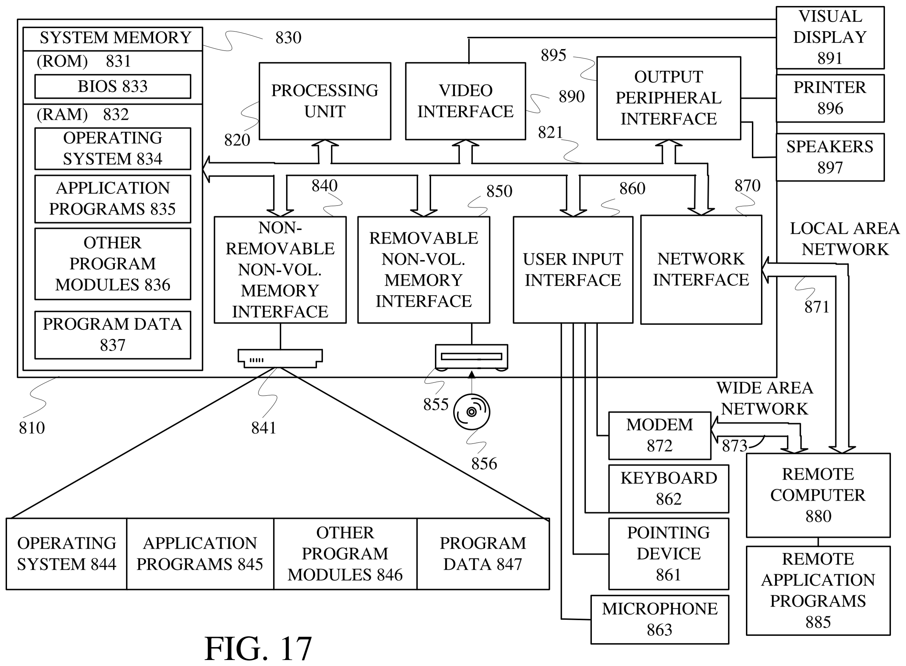

FIG. 17 is one example of a computing environment in which elements of other FIGs, or parts of it, (for example) can be deployed. With reference to FIG. 17, an example system for implementing some embodiments includes a computing device in the form of a computer 810 programmed to operate as described above. Components of computer 810 may include, but are not limited to, a processing unit 820 (which can comprise processors or servers from previous Figures), a system memory 830, and a system bus 821 that couples various system components including the system memory to the processing unit 820. The system bus 821 may be any of several types of bus structures including a memory bus or memory controller, a peripheral bus, and a local bus using any of a variety of bus architectures. Memory and programs described with respect to FIGS. 2 and 11 can be deployed in corresponding portions of FIG. 17.

Computer 810 typically includes a variety of computer readable media. Computer readable media can be any available media that can be accessed by computer 810 and includes both volatile and nonvolatile media, removable and non-removable media. By way of example, and not limitation, computer readable media may comprise computer storage media and communication media. Computer storage media is different from and does not include a modulated data signal or carrier wave. Computer storage media includes hardware storage media including both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium, which can be used to store the desired information, and which can be accessed by computer 810. Communication media may embody computer readable instructions, data structures, program modules or other data in a transport mechanism and includes any information delivery media. The term "modulated data signal" means a signal that has one or more of its characteristics set or changed in such a manner as to encode information in the signal. System memory 830 includes computer storage media in the form of volatile and/or nonvolatile memory such as read only memory (ROM) 831 and random-access memory (RAM) 832. A basic input/output system 833 (BIOS), containing the basic routines that help to transfer information between elements within computer 810, such as during start-up, is typically stored in ROM 831. RAM 832 typically contains data and/or program modules that are immediately accessible to and/or presently being operated on by processing unit 820. By way of example, and not limitation, FIG. 17 illustrates operating system 834, application programs 835, other program modules 836, and program data 837.

The computer 810 may also include other removable/non-removable volatile/nonvolatile computer storage media. By way of example only, FIG. 17 illustrates a hard disk drive 841 that reads from or writes to non-removable, nonvolatile magnetic media, an optical disk drive 855, and nonvolatile optical disk 856. The hard disk drive 841 is typically connected to the system bus 821 through a non-removable memory interface such as interface 840, and optical disk drive 855 are typically connected to the system bus 821 by a removable memory interface, such as interface 850.

Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (e.g., ASICs), Application-specific Standard Products (e.g., ASSPs), System-on-a-chip systems (SOCs), Complex Programmable Logic Devices (CPLDs), etc.

The drives and their associated computer storage media discussed above and illustrated in FIG. 17, provide storage of computer readable instructions, data structures, program modules and other data for the computer 810. In FIG. 17, for example, hard disk drive 841 is illustrated as storing operating system 844, application programs 845, other program modules 846, and program data 847. Note that these components can either be the same as or different from operating system 834, application programs 835, other program modules 836, and program data 837.

A user may enter commands and information into the computer 810 through input devices such as keyboard 862, a microphone 863, and a pointing device 861, such as a mouse, trackball or touch pad. Other input devices (not shown) may include a joystick, game pad, satellite dish, scanner, or the like. These and other input devices are often connected to the processing unit 820 through a user input interface 860 that is coupled to the system bus but may be connected by other interface and bus structures. A visual display 891 or other type of display device is also connected to the system bus 821 via an interface, such as a video interface 890. In addition to the monitor, computers may also include other peripheral output devices such as speakers 897 and printer 896, which may be connected through an output peripheral interface 895.

The computer 810 is operated in a networked environment using logical connections (such as a controller area network - CAN, local area network - LAN, or wide area network WAN) to one or more remote computers, such as a remote computer 880.

When used in a LAN networking environment, the computer 810 is connected to the LAN 871 through a network interface or adapter 870. When used in a WAN networking environment, the computer 810 typically includes a modem 872 or other means for establishing communications over the WAN 873, such as the Internet. In a networked environment, program modules may be stored in a remote memory storage device. FIG. 17 illustrates, for example, that remote application programs 885 can reside on remote computer 880.

It should also be noted that the different examples described herein can be combined in different ways. That is, parts of one or more examples can be combined with parts of one or more other examples. All of this is contemplated herein.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. An agricultural system (90), comprising:
an applicator (109) having a valve (300) and an exit end, the valve (300) being controllable to move between an open position, in which liquid under pressure passes from an inlet end of the applicator (109) to the exit end of the applicator (109) , and a closed position;
a pressure sensor (306) configured to sense pressure between the valve (300) and the exit end of the applicator (109) and generate a sensor signal responsive to the sensed pressure;
an applicator state detection system (372) configured to identify a pressure characteristic corresponding to the applicator (109) based on the sensor signal and to determine an applicator state corresponding to the applicator (109) based on the pressure characteristic; and
a control signal generator (374) configured to generate a control signal responsive to the applicator state.

2. The agricultural system (90) of claim 1 and further comprising:
a plurality of applicators (109), each having a valve (300) and an exit end;
a plurality of pressure sensors (306), each configured to sense pressure between the valve (300) and the exit end of a corresponding one of the plurality of applicators (109) and generate a sensor signal responsive to the sensed pressure, wherein the applicator state detection system (372) is configured to identify a plurality of pressure characteristic values, each pressure characteristic value corresponding to one of the plurality of agricultural applicators (109) and being identified based on the corresponding sensed pressures.

3. The agricultural system (90) of claim 1 or 2 wherein the applicator state detection system (372) comprises:
a decay slope processor (386) configured to identify a plurality of pressure decay slopes, each pressure decay slope corresponding to a sensor signal decay of one of the plurality of pressure sensors (306) between an initial pressure value and a threshold value over a time period after the valve (300) is closed; and
a slope range/threshold generator (390) configured to generate a slope range/threshold based on the plurality of pressure decay slopes.

4. The agricultural system (90) of one of the claims 1 to 3, wherein the applicator state detection system (372) comprises:
a comparison system (396) configured to compare the pressure decay slope of a selected sensor in a selected applicator (109) to the slope range/threshold to generate a comparison result; and
an applicator state processor (398) configured to identify the applicator state of the selected applicator (109) based on the comparison result.

5. The agricultural system (90) of claim 4 wherein the slope range/threshold generator (390) is configured to generate a first slope range/threshold value and wherein the applicator state processor (398) is configured to identify the applicator state for the selected applicator (109) as partially blocked when the comparison result indicates that the pressure decay slope for the selected sensor in the selected applicator (109) is above the first range/threshold value.

6. The agricultural system (90) of claim 2 to 5, wherein the applicator state detection system (372) comprises:
a valve ON pressure aggregation system (382) configured to generate a plurality of aggregate pressure values, each aggregate pressure value corresponding to a different one of the plurality of applicators (109) and being based on pressure values detected over the time period while the valve (300) in the one of the plurality of applicators (109) is open; and
an aggregated pressure range/threshold generator (392) configured to generate an aggregate pressure range/threshold based on the plurality of aggregate pressure values.

7. The agricultural system (90) of one of the claims 4 to 6, wherein the applicator state detection system (372) comprises:
the comparison system (396) configured to compare the aggregate pressure value for a selected sensor in a selected applicator (109) to the aggregate pressure range/threshold to generate a comparison result; and
the applicator state processor (398) configured to identify the applicator state of the selected applicator (109) based on the comparison result.

8. The agricultural system (90) of one of the claims 4 to 7, wherein the applicator state processor (398) is configured to identify the applicator state for the selected applicator (109) as missing a spray tip when the comparison result indicates that the aggregate pressure value for the selected applicator (109) is below the aggregate pressure range/threshold.

9. A computer implemented method, comprising:
receiving (414) a pressure sensor signal indicative of pressure sensed by a pressure sensor (306) in an agricultural applicator (109) that has a valve (300) and an exit end, the pressure sensor (306) being configured to sense the pressure between the valve (300) and the exit end of the agricultural applicator (109);
identifying (418, 424) a pressure characteristic corresponding to the applicator (109) based on the pressure sensor signal;
determining (426) an applicator state corresponding to the applicator (109) based on the pressure characteristic; and
generating (438) a control signal responsive to the applicator state.

10. The computer implemented method of claim 9, and further comprising:
receiving pressure sensor signals from a plurality of different pressure sensors (306) on a plurality of different corresponding agricultural applicators (109), each pressure sensor signal being indicative of sensed pressures between a valve (300) and an exit end of each corresponding agricultural applicator (109).

11. The computer implemented method of claim 9 or 10, wherein identifying a pressure characteristic comprises:
identifying a plurality of pressure characteristic values, each pressure characteristic value corresponding to one of the plurality of agricultural applicators (109) and being identified based on the corresponding sensed pressures.

12. The computer implemented method of one of the claims 9 to 11, wherein determining an applicator state comprises:
identifying a comparison value based on the plurality of pressure characteristic values; and
determining the applicator state corresponding to each of the plurality of different agricultural applicators (109) based on the corresponding pressure characteristic value and the comparison value.

13. The computer implemented method of one of the claims 9 to 12, wherein receiving a pressure sensor signal indicative of pressure sensed by a pressure sensor (306) in an agricultural applicator (109) comprises:
receiving the pressure sensor signal indicative of the pressure, over a time period, after the valve (300) closes.

14. The computer implemented method of one of the claims 9 to 13, wherein identifying a pressure characteristic comprises:
identifying a slope of a pressure decay between an initial pressure value and a threshold value, over the time period, for a selected agricultural applicator (109) of the plurality of different agricultural applicators (109).

15. The computer implemented method of one of the claims 11 to 14, wherein identifying a plurality of pressure characteristic values comprises:
identifying a plurality of slopes of a pressure decay, each slope corresponding to a pressure decay of one of the plurality of agricultural applicators (109) an initial pressure value and a threshold value over a time period, based on the corresponding sensed pressures, and wherein identifying the comparison value comprises identifying the comparison value based on the plurality of slopes.
